(19) Europäisches Patentamt
European Patent Office
Office européen des brevets

(11) EP 2 510 060 B1

(12) **EUROPÄISCHE PATENTSCHRIFT**

(45) Veröffentlichungstag und Bekanntmachung des Hinweises auf die Patenterteilung:
**01.01.2014 Patentblatt 2014/01**

(21) Anmeldenummer: **11702942.1**

(22) Anmeldetag: **04.02.2011**

(51) Int Cl.:
***C09C 1/64*** (2006.01) ***C09D 5/02*** (2006.01)
***C09D 5/38*** (2006.01) ***C09D 7/12*** (2006.01)
***C08K 9/02*** (2006.01) ***C09D 5/03*** (2006.01)

(86) Internationale Anmeldenummer:
**PCT/EP2011/000514**

(87) Internationale Veröffentlichungsnummer:
**WO 2011/095341 (11.08.2011 Gazette 2011/32)**

(54) **MIT SIO2 BESCHICHTETE METALLEFFEKTPIGMENTE, VERFAHREN ZUR HERSTELLUNG DIESER METALLEFFEKTPIGMENTE UND VERWENDUNG**

METAL EFFECT PIGMENTS COATED WITH SIO2, METHOD FOR PRODUCING SAID METAL EFFECT PIGMENTS AND USE

PIGMENTS À EFFET MÉTALLIQUE ENROBÉS DE SIO2, PROCÉDÉ DE PRODUCTION DESDITS PIGMENTS ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.02.2010 DE 102010007147**

(43) Veröffentlichungstag der Anmeldung:
**17.10.2012 Patentblatt 2012/42**

(73) Patentinhaber: **Eckart GmbH**
**91235 Hartenstein (DE)**

(72) Erfinder:
- **NGUYEN, Phu Qui**
**41238 Mönchengladbach (DE)**
- **WINKELMANN, Pär**
**90607 Rückersdorf (DE)**

(74) Vertreter: **Walcher, Armin**
**Louis, Pöhlau, Lohrentz**
**Postfach 3055**
**90014 Nürnberg (DE)**

(56) Entgegenhaltungen:
**EP-A1- 1 619 222 US-A- 5 766 335**

- **A. KIEHLK. GREIWE: "Encapsulated aluminium pigments", PROGR. IN ORG. COATINGS, Bd. 37, 19. März 2008 (2008-03-19), Seiten 179-183, XP002638425,**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 510 060 B1

## Beschreibung

Die vorliegende Erfindung betrifft ein Sol-Gel-Verfahren zur Herstellung von mit Siliciumoxid, vorzugsweise $SiO_2$, beschichteten Aluminiumeffektpigmenten mit korrosionsbeständiger Beschichtung für Wasserlacke.

Der rasante Anstieg der Verwendung von umweltfreundlichen Wasserlacken im Automobilbereich und in Industrielacken erforderte die Entwicklung korrosionsgeschützter Metalleffektpigmente. Insbesondere die weit verbreiteten Aluminiumeffektpigmente neigen in den basisch eingestellten Wasserlacken zur Oxidation, bei der Wasserstoff entsteht und das Aluminiumeffektpigment oxidiert wird. Die Oxidation führt dabei zu einem Verlust des Spiegelglanzes, was auch als Vergrauung bezeichnet wird.

Äußerst wirkungsvoll korrosionsgeschützte Aluminiumeffektpigmente werden nach dem Chromatierverfahren (EP 0 259 592) hergestellt und sind unter dem Handelsnamen Hydrolux® von der Firma Eckart erhältlich. Diese gegenüber Korrosion geschützten Aluminiumeffektpigmente zeichnen sich durch eine ausgezeichnete Gasungsstabilität und eine hervorragende Deckkraft aus. Unter Deckkraft, auch Deckvermögen genannt, wird die pro Gewichtseinheit Pigment abgedeckte Fläche verstanden. Insbesondere ist die Deckkraft der chromatierten Aluminiumeffektpigmente vergleichbar mit der Deckkraft der Aluminiumeffektpigmente vor der Chromatierung.

Nachteiligerweise enthalten die chromatierten Aluminiumeffektpigmente Chromverbindungen. Auch wenn chromatierte Aluminiumeffektpigmente keine nachweisbaren Mengen des giftigen Cr(IV) enthalten, sind sie dennoch aufgrund des Schwermetallgehalts aus ökologischer Sicht nicht vorteilhaft.

Aus diesem Grund wurden mit $SiO_2$ beschichtete Aluminium- oder Goldbronzeeffektpigmente entwickelt. Die Beschichtung mit $SiO_2$ erfolgt vorzugsweise unter Verwendung des Sol-Gel-Prozesses, bei dem es zunächst zu einer Sol-Gel-Einkapselung der Aluminium- bzw. Goldbronzeeffektpigmente und nachfolgend zur Ausbildung einer Siliziumdioxidbeschichtung kommt. Die mit $SiO_2$ beschichteten Aluminium- bzw. Goldbronzeeffektpigmente weisen eine hohe Korrosionsbeständigkeit auf, da durch die Barrierewirkung der Siliziumdioxidbeschichtung die Migration von Wasser oder anderen korrosiven Stoffen an der Pigmentoberfläche verhindert wird.

Die $SiO_2$-Beschichtung erfolgt über ein schonendes, umweltfreundliches Sol-Gel-Verfahren, welches durch Basen katalysiert wird (A. Kiehl, K. Greiwe Progr. in org. Coatings 37 (1999), 179 -183). Am Markt erhältliche, unter Verwendung von Sol-Gel-Verfahren mit $SiO_2$ beschichtete Metalleffektpigmente sind Hydrolan® (Aluminiumeffektpigmente) und Dorolan® (Goldbronzeeffektpigmente) von der Firma Eckart. Weitere am Markt erhältliche $SiO_2$-beschichtete Aluminiumeffektpigmente sind beispielsweise Emeral® von der Fa. Toyo, Japan, Aquamet® von der Fa. Schlenk, Deutschland, und Silbercote® von der Fa. Silberline, USA.

Mit $SiO_2$-beschichtet Aluminiumeffektpigmente besitzen in der Regel eine ausreichende Gasungsstabilität. Unter einer ausreichenden Gasungsstabilität wird verstanden, dass es unter Einfluss von Wasser in der Regel zu keiner wesentlichen Entwicklung von Wasserstoff kommt, da das Aluminium relativ effektiv vor dem Angriff durch Wasser geschützt ist. Die Gasungsstabilität hängt jedoch auch von den Umgebungsbedingungen ab, denen das Aluminiumeffektpigment ausgesetzt wird.

Gelegentlich können bei Metalleffektpigmenten mit einem sehr feinen Kornband und einer entsprechend großen spezifischen Oberfläche, d.h. Oberfläche pro Gewichtseinheit Metalleffektpigment, unerwünschte Schwankungen in der Gasungsstabilität auftreten. Die Deckkraft der aus dem Stand der Technik bekannten $SiO_2$-beschichteten Aluminiumeffektpigmente nimmt jedoch deutlich ab, verglichen mit dem Ausgangsmaterial und im Vergleich zu chromatierten Pigmenten.

Für die Beschichtung von Substraten mit Siliziumdioxid sind im Stand der Technik zwei Methoden als wesentlich beschrieben. Die erste Methode ist die Nutzung von Alkalisilikaten, die durch katalysierte Hydrolyse in Silanole überführt werden, um anschließend zu einem anorganischen Netzwerk zu verschmelzen (R.K. Iler et al US 2885366, 1959; R.K. Iler "The Chemistry of Silica", 1979).

Die zweite Methode ist die Nutzung des Sol-Gel-Prozesses, ausgehend von Alkoxysilanen, die unter Katalyse mit Wasser zu Silanol und Alkohol umgesetzt werden. Bei der herkömmlichen Sol-Gel-Beschichtung von Aluminiumeffektpigmenten unter Verwendung von Alkoxysilanen wird das pulverförmige Ausgangspigment in alkoholischer Phase dispergiert und anschließend unter Wärmezufuhr die Alkoxysilane, Wasser und wenigstens ein basischer oder saurer Katalysator zugegeben.

Bei der Hydrolyse von Tetraethoxysilan-Verbindungen bilden sich Silanolstrukturen der Zusammensetzung $Si(OH)_{4-y}(OCH_2CH_3)_y$ (y= 0-3), die Polykondensationsreaktionen eingehen können. An der Pigmentoberfläche entsteht im Verlauf der Reaktion ein kompaktes Siliziumdioxidnetzwerk, das die Pigmentpartikel vollständig einkapselt. Die auf die Pigmentoberfläche frisch gefällte Siliziumdioxidbeschichtung kann darüber hinaus gezielt weiteren Oberflächenmodifikationen unterzogen werden. Beispielsweise können Silane mit wenigstens einem nicht-hydrolysierbaren Substituent, beispielsweise Alkysilane, nach Aufbringung der $SiO_2$-Beschichtung hinzugefügt und in-situ hydrolysiert werden, wobei die Silane mit wenigstens einem nicht-hydrolysierbaren Substituent über weitere Kondensationsreaktionen fest an bzw. auf der Siliziumdioxidschicht auf der Pigmentoberfläche verankert werden. Der nach Abkühlung und Absaugung der Lösung erhaltene Filterkuchen kann im Vakuum getrocknet und dem bestimmungsgemäßen Einsatz zugeführt werden.

Aus der US 2,885,366 A ist ein basisches Verfahren zur Herstellung eines von mit Metalloxiden oberflächenstabilisierten Produktes, welches auch aus $SiO_2$-beschichteten Metalleffektpigmenten bestehen kann.

Ein grundlegendes Verfahren zur Herstellung von mit reaktiven Orientierungshilfsmitteln beschichteten Effektpigmenten - unter Verwendung eines basischen Katalysators - ist in der DE 198 20 112 A1 beschrieben.

Wasserbasislacke, die mit $SiO_2$ beschichtete Aluminiumeffektpigmente enthalten, sind in der EP 1 332 714 A1 offenbart.

Auch die WO 2004/026268 A2 offenbart ein Verfahren zur Herstellung eines gegenüber Korrosion stabilen Metalleffektpigments für ein kosmetisches Präparat, bei dem der Aluminiumkern mittels Sol-Gel-Prozess, unter Verwendung von geeigneten Katalysatoren, mit einer $SiO_2$-Beschichtung versehen wird. Die Katalyse selbst ist in dieser Patentanmeldung nicht näher beschrieben.

Die EP 1 756 234 B1 betrifft ein Verfahren zur Herstellung einer wässrigen Beschichtungszusammensetzung, welche wenigstens ein mit Wasser kompatibles filmbildendes Mittel und mit wenigstens einer anorganischen Korrosionsschutzschicht versehene Aluminiumeffektpigmente enthält. Diese Aluminiumeffektpigmente weisen wenigstens eine mittels Sol-Gel-Verfahrens erzeugte $SiO_2$-Schicht auf. Einzelheiten zur Stabilisierung gegenüber Korrosion sind diesem Patent nicht zu entnehmen.

Aus dem US-Patent US 7,419,538 B2 ist ein Verfahren zur Herstellung von mit Phosphorsäure und/oder Borsäure vorbehandelten plättchenförmigen Aluminiumeffektpigmenten, die anschließend mittels Sol-Gel-Prozess in Wasser mit einer $SiO_2$-Schich versehen werden bekannt. Bei diesem Verfahren wird bei dem Beschichtungsvorgang ein basischer Katalysator verwendet.

Die EP 1 619 222 A1 betrifft ein Verfahren zur Herstellung eines mit einer Molybdän- und/oder $SiO_2$-Beschichtung versehenen Aluminiumeffektpigments für wasserbasierende Farben unter Verwendung von organischen Basen, wie z.B. Ethanolamin, oder anorganischer oder organischer Säuren, wie z.B. Schwefelsäure oder Oxalsäure, als Katalysatoren.

Die EP 1 953 195 A offenbart ein Verfahren zur Stabilisierung von Aluminiumeffektpigmenten unter Aufbringung einer Multilayer-Beschichtung. Dabei wird das mit Phosphor- oder Molybdänverbindungen vorbehandelte Pigment durch eine sauer oder basisch katalysierte Sol-Gel-Synthese mit Siliziumdioxid gekapselt und danach in einem separaten Schritt mit einer organischen Polymermatrix ummantelt.

Die WO 03/095564 A1 betrifft ein Verfahren zur Herstellung von goniochromatischen Glanzpigmenten mit einer Interferenzfarben zeigenden Beschichtung, in die ein polares organisches Lösungsmittel eingelagert ist. Zur Herstellung dieser goniochromatischen Glanzpigmente werden die Pigmentteilchen, wie beispielsweise gegenüber Korrosion stabilisierte Aluminiumeffektpigmente, zunächst mit einer dielektrischen, niedrigbrechenden Schicht, wie beispielsweise Siliciumdioxid, belegt und anschließend mit einer reflektierenden Beschichtung versehen. Die nasschemische Beschichtung der Aluminiumeffektpigmente mit Siliziumdioxid erfolgt im basischen pH-Wert-Bereich.

Schließlich offenbart die JP 2004124069 A ein Verfahren zur Herstellung von Siliziumdioxid-beschichteten Aluminiumeffektpigmenten für wasserbasierende Anwendungssysteme unter Verwendung von basischen Katalysatoren.

Die bekannten Verfahren zur $SiO_2$-Beschichtung von Metalleffektpigmenten haben jedoch den Nachteil, dass sie nicht immer- insbesondere bei sehr feinen Metalleffektpigmenten - eine ausreichende Korrosionsstabilität, insbesondere Gasungsstabilität der damit erhältlichen Metalleffektpigmente gewährleisten. Zudem tritt meistens ein deutlicher Verlust der Deckkraft durch die $SiO_2$-Beschichtung ein.

US 5,766,335 offenbart ein mit Siliciumoxid beschichtetes Metallpigment. EP 1 619 222 A1 offenbart ein mit amorphem Siliciumdioxid beschichtetes Aluminiumpigment.

Aufgabe der Erfindung ist es, Metalleffektpigmente, insbesondere von Aluminiumeffektpigmenten, bereitzustellen, die gegenüber Korrosion stabilisiert sind und verbesserte Anwendungseigenschaften aufweisen. Insbesondere sollen die bereitzustellenden Metalleffektpigmente eine verbesserte Deckkraft und/oder Gasungsstabilität aufweisen.

Die der Erfindung zugrundeliegende Aufgabe wird durch Bereitstellung eines Metalleffektpigments, welches als Pulver, Trockenpräparat oder Paste vorliegt, gemäß Anspruch 1 gelöst.

Bevorzugte Weiterbildungen sind in den Unteransprüchen 2 bis 3 angegeben.

Eine weitere Aufgabe der Erfindung ist es, ein Verfahren zum Beschichten von Metalleffektpigmenten, insbesondere von Aluminiumeffektpigmenten, mit verbesserter Deckkraft und Gasungsstabilität bereitzustellen,

Die der Erfindung zugrundeliegende Aufgabe wird weiterhin durch Bereitstellung eines Verfahrens zum Beschichten von Metalleffektpigmenten mit Siliciumoxid, wobei Alkoxysilan(e) und/oder Siliciumhalogenid(e) in organischem Lösungsmittel mit Wasser in Gegenwart von Metalleffektpigmenten umgesetzt werden, gelöst, wobei die Umsetzung wenigstens zwei Schritte umfasst, wobei (a) die Umsetzung in einem ersten Schritt unter Zugabe von Säure und in einem zweiten Schritt unter Zugabe von Base durchgeführt wird oder wobei (b) die Umsetzung in einem ersten Schritt unter Zugabe von Base und in einem zweiten Schritt unter Zugabe von Säure durchgeführt wird.

Bevorzugte Weiterbildungen sind in den Unteransprüchen 5 bis 13 angegeben.

Des Weiteren wird die Aufgabe der Erfindung auch durch die Verwendung von Metalleffektpigment nach Anspruch 1 bis 3 in Kosmetika, Kunststoffen und Beschichtungszusammensetzungen, vorzugsweise Farben, Druckfarben, Lacken, Pulverlacken gelöst.

Schließlich wird die Aufgabe der Erfindung auch durch Bereitstellung eines Gegenstands gelöst, wobei der Gegenstand Metalleffektpigment gemäß Ansprüche 1 bis 3 enthält.

Bei dem erfindungsgemäßen Verfahren werden das/die Alkoxysilan(e) und/oder das/die Siliciumhalogenid(e) in dem organischen Lösemittel oder Lösemittelgemisch durch das vorhandene und/oder zugegebene Wasser hydrolysiert. Durch die Hydrolyse werden auf den Siliciumatomen OH-Gruppen, die auch als Silanolgruppen bezeichnet werden, ausgebildet. Die Silanolgruppen kondensieren unter Wasserabspaltung und Ausbildung eines Si-O-Si-Netzwerkes. Dieses Si-O-Si-Netzwerk fällt dann in Form eines Sols/Gels auf die Metalleffektpigmente auf, wodurch diese mit Siliciumoxid, vorzugsweise $SiO_2$, ummantelt oder eingekapselt werden.

Die Erfinder haben überraschend herausgefunden, dass Metalleffektpigmente, die mit einem wenigstens zweistufigen Verfahren mit Siliciumoxid, vorzugsweise $SiO_2$, beschichtet wurden, verbesserte Anwendungseigenschaften aufweisen. Das zweistufige Verfahren basiert hierbei auf unterschiedliche Katalysatoren und umfasst einen sauer und einen basisch katalysierten Schritt.

Es ist bislang ist noch nicht klar, worauf dieser überraschende Effekt zurückzuführen ist. In Abhängigkeit vom pH-Wert ändert sich das Verhältnis der Geschwindigkeit der Hydrolyse der Alkoxygruppe(n) der Alkoxysilane und/oder der/des Halogenide(s) der Siliciumhalogenide zu Silanolgruppe(n) zur Geschwindigkeit der Kondensation der Silanolgruppen miteinander unter Ausbildung von Si-O-Si-Bindungen.

Bei einer bevorzugten Variante der Erfindung erfolgt die Hydrolyse der Alkoxygruppe(n) vorwiegend unter Zugabe von Säure(n). Bei dieser Verfahrensvariante liegt der pH-Wert vorzugsweise in einem Bereich von pH 3 bis 7, vorzugsweise von pH 4 bis 6,5. Ein pH-Wertbereich von pH 4,5 bis pH 6 ist auch sehr geeignet.

Gemäß einer bevorzugten Weiterbildung dieser Verfahrensvariante erfolgt die Kondensation der erzeugten Silanolgruppen zu Si-O-Si-Bindungen vorwiegend unter Zugabe von Base. Der pH-Wert liegt dabei vorzugsweise in einem pH-Wertebereich von mehr als pH 7 bis pH 11, weiter bevorzugt von pH 7,5 bis pH 10. Als sehr geeignet hat sich auch ein pH im Bereich von pH 8 bis pH 9,5 erwiesen.

Gemäß einer Variante der Erfindung kann auch ein kontinuierlicher pH-Gradient während der Beschichtung angelegt werden. Bevorzugt wird dabei der pH-Wert kontinuierlich von sauer nach basisch durch kontinuierliche Zugabe der entsprechenden Reagenzien geändert.

In einer weiter bevorzugten Ausführungsform erfolgt zwischen dem Schritt der Hydrolyse unter Zugabe von Säure und dem Schritt der Kondensation unter Zugabe von Basen ein pH-Sprung. Die Differenz des pH-Wertes zwischen dem ersten und dem zweiten Schritt liegt vorzugsweise in einem Bereich von 0,3 bis 4 pH-Einheiten, weiter bevorzugt von 0,5 bis 3 pH-Einheiten und noch weiter bevorzugt von 0,7 bis 2 pH-Einheiten.

Bei dieser äußerst bevorzugten Ausführungsform des erfindungsgemäßen Verfahrens erfolgt die Umsetzung unter saurer Katalyse in einem ersten Schritt und unter basischer Katalyse in einem zweiten Schritt. Das Reaktionsschema (I) ist dabei wie folgt:

$$Met_{disp.} + Si(OR)_4 + 2\,H_2O \xrightarrow{\text{1. Säure}} \xrightarrow{\text{2. Base}} Met/SiO_2 + 4\,ROH \qquad (I)$$

Die Säure bzw. Base wirken jeweils katalytisch, indem die Reaktionsgeschwindigkeit der Hydrolyse zu Silanolgruppen und/oder Kondensation der Silanolgruppen unter Ausbildung von Si-O-Si-Bindungen eines Siliciumoxidnetzwerkes, vorzugsweise eines Siliciumdioxidnetzwerkes, beeinflusst wird. Hierbei findet im ersten Schritt die Hydrolyse der Alkoxysilane zu Silanolen (Ia) und im zweiten Schritt die Kondensation der Silanole (Ib) kinetisch bevorzugt statt.

$$Si(OR)_4 + H_2O \xrightarrow[-\,ROH]{} HO\text{-}Si(OR)_3 \xrightarrow[-\,ROH]{+\,H_2O} (HO)_2\text{-}Si(OR)_2 \longrightarrow \longrightarrow \quad (Ia)$$

$$2\ HO\text{-}Si(OR)_3 \rightarrow (RO)_3\text{-}Si\text{-}O\text{-}Si\text{-}(OR)_3 + H_2O \qquad (Ib)$$

Es ist von Sol-Gel-Prozessen bekannt, dass bei saurer Katalyse zunächst einmal lineare und/oder ringförmige und/oder leiterartige Siloxanoligomere entstehen, die einen nur geringen Silanolgruppenanteil aufweisen. Der Grund liegt in der abnehmenden Hydrolysegeschwindigkeit der oligomeren gegenüber der Hydrolysegeschwindigkeit der monomeren Alkoxysilane.

Bei der basischen Katalyse dagegen bilden sich bevorzugt dreidimensionale Siloxanoligomerstrukturen mit

einem hohen Silanolgehalt aus. Hier liegen eine zunehmende Hydrolysegeschwindigkeit der Oligomere gegenüber der Hydrolysegeschwindigkeit der monomeren Alkoxysilane sowie eine hohe Kondensationsgeschwindigkeit vor.

Bei einer raschen Kondensation von Silanolgruppen unter Ausbildung von Si-O-Si-Bindungen werden Metalleffektpigmente mit einem kleinen Partikeldurchmesser nachteiligerweise zusammen mit dem sich rasch bildenden Siliciumoxid, üblicherweise $SiO_2$, auf der Oberfläche von Metalleffektpigmenten mit einem größeren Partikeldurchmesser aufgefällt bzw. abgeschieden. Die Metalleffektpigmente mit kleinerem Partikeldurchmesser werden mithin in der Siliciumoxidummantelung der Metalleffektpigmente mit größerem Partikeldurchmesser eingekapselt.

Hierdurch entstehen zugleich zwei Nachteile:

Für eine gute Deckkraft (Deckvermögen), d.h. die pro Gewichtseinheit Pigment abgedeckte Substratfläche, ist der Anteil an Metalleffektpigmenten mit kleinem Partikeldurchmesser, der auch als Feinanteil bezeichnet wird, in einer Metalleffektpigmentpräparation wesentlich. Die Deckkraft wird auch als Opazität bezeichnet.

Ein Metalleffektpigment liegt üblicherweise in einer Teilchengrößenverteilung vor. Mit zunehmender Breite der Teilchengrößenverteilung nimmt die Deckkraft, d.h. die Opazität, des Metalleffektpigments zu. Der Feinanteil eines Metalleffektpigmentes, vorzugsweise Aluminiumeffektpigmentes, ist beispielsweise durch den $D_{10}$-Wert der Summenverteilung der Größenverteilungskurve charakterisiert. Die Größenverteilungskurve wird üblicherweise mittels Lasergranulometrie ermittelt.

Durch die Verringerung des Feinanteils einer Metalleffektpigmentpräparation durch Auffällen desselben zusammen mit dem sich bildenden Siliciumoxid auf die Metalleffektpigmente mit größerem Partikeldurchmesser wird die Deckkraft bzw. die Opazität der siliciumoxidbeschichteten Metalleffektpigmentpräparation verringert.

Der zweite Nachteil ist, dass der metallische Glanz der mit Siliciumoxid beschichteten Metalleffektpigmentpräparation verringert wird. Aufgrund der Auffällung des Feinanteils auf die Metalleffektpigmente mit größerem Pigmentdurchmesser wird einfallendes Licht allein schon aufgrund des erhöhten Kantenanteils stärker gestreut. Dieser Effekt wirkt sich insbesondere beeinträchtigend auf den Glanz der Metalleffektpigmente aus.

Bei dieser ersten Variante des erfindungsgemäßen Verfahrens kommt es, vermutlich aufgrund der langsamen Erzeugung der Silanolgruppen zu einer langsamen Auffällung von Siliciumoxid auf die Metalleffektpigmente. Vermutlich werden im Hinblick auf die langsamere Auffällung des Siliciumoxids der Feinanteil der Metalleffektpigmentpräparation nicht "mitgerissen", sondern separat mit Siliciumoxid beschichtet, weshalb die Deckkraft und der metallische Glanz nicht beeinträchtigt werden.

Bei dem zweiten Verfahrensschritt wird, nachdem die Metalleffektpigmente mit einer ersten Schicht aus Siliciumoxid, vorzugsweise $SiO_2$, beschichtet sind, nachfolgend unter Zugabe von Base eine zweite Schicht aus Siliciumoxid, vorzugsweise $SiO_2$, aufgebracht.

Überraschenderweise kommt es nach der Zugabe von Base in dem zweiten Schritt nicht zu einer wesentlichen, vorzugsweise zu keiner, Agglomeration von Metalleffektpigmenten mit kleinem Partikeldurchmesser auf oder an Metalleffektpigmenten mit größerem Partikeldurchmesser. Es wird vermutet, dass dieser Effekt auf die Belegung der Metalleffektpigmentoberfläche mit der ersten Siliciumoxidbeschichtung zurückzuführen ist.

Überraschend ist ferner, dass bei dem erfindungsgemäßen Verfahren, dass auch als Sol-Gel-Verfahren bezeichnet werden kann, Metalleffektpigmente mit den gleichen Mengen an Siliciumoxid, vorzugsweise $SiO_2$, beschichtet werden, wie bei einem üblicherweise im Stand der Technik verwendeten rein basischen Prozess, obgleich die Umsetzung in einer sauren oder angesäuerten Reaktionslösung beginnt und, vorzugsweise über einen pH-Gradienten, in einem weniger sauren, neutralen oder basischen Bereich endet.

Dies gilt insbesondere im Hinblick darauf, dass dem Stand der Technik zu entnehmen ist, dass die Auffällung von Siliziumdioxid auf eine Aluminiumeffektpigmentoberfläche unter Katalyse mit einer Base zu einer besseren Schichtbildung und einer besseren Ausbeute führt (z. B. EP 1 619 222 A1, EP 1 953 195 A1), weshalb im Stand der Technik grundsätzlich ein basischer Katalysator verwendet wird (A. Kiehl, K. Greiwe, Progr. in org. Coatings 37 (1999), 179 - 183).

Überraschenderweise kann erfindungsgemäß in einem pH-Bereich von pH 4 bis 7 gearbeitet werden, der im Stand der Technik, wie beispielsweise in EP 1 953 195 A1 beschrieben, bei Durchführung eines ausschließlich im sauren pH-Wert-Bereich durchgeführten Prozesses explizit ausgeschlossen wurde.

Überraschend wurde mithin gefunden, dass die mit dem erfindungsgemäßen Sol-Gel-Verfahren mit Siliciumoxid, vorzugsweise $SiO_2$, beschichteten Metalleffektpigmente eine gegenüber mit herkömmlichem Sol-Gel-Verfahren mit Siliciumoxid beschichteten Metalleffektpigmenten verbesserte Deckkraft aufweisen.

Bei der zweiten Verfahrensvariante, erfolgt gemäß Reaktionsschema (II) in einem ersten Schritt die basische Katalyse und anschließend in einem zweiten Schritt die saure Katalyse:

$$Met_{disp.} + Si(OR)_4 + 2\ H_2O \xrightarrow{\text{Base}} \xrightarrow{\text{Säure}} Met/SiO_2 + 4\ ROH \qquad (II)$$

Überraschend führt auch diese Verfahrensroute zu einer verbesserten Deckkraft der erfindungsgemäßen Metalleffektpigmente.

Bei einer bevorzugten Ausführungsform wird nach Zugabe des basischen Katalysators der im zweiten Schritt verwendete saure Katalysator rasch zugegeben. Hierunter wird, bezogen auf den Zeitpunkt der Zugabe des basischen Katalysators, vorzugsweise ein Zeitraum von 15 min bis 4 h, bevorzugt 20 min bis 2,5 h und weiter bevorzugt 30 min bis 1,5 h verstanden. Der pH-Wert kann bei einer Ausführungsform der zweiten Verfahrensvariante kontinuierlich von basisch nach sauer durch Zugabe von Säure geändert werden. Bei einer weiteren bevorzugten Ausführungsform der zweiten Verfahrensvariante erfolgt die Zugabe von Säure ein pH-Sprung. Die Differenz des pH-Wertes zwischen dem ersten und dem zweiten Schritt liegt vorzugsweise in einem Bereich von 0,3 bis 4 pH-Einheiten, weiter bevorzugt von 0,5 bis 3 pH-Einheiten und noch weiter bevorzugt von 0,7 bis 2 pH-Einheiten.

Für beide Verfahrensvarianten werden prinzipiell die gleichen Säuren und/oder Basen als Katalysatoren verwendet.

Als Säuren können organische und/oder anorganische Säuren verwendet werden. Besonders bevorzugt sind organische Säuren.

Die erfindungsgemäß als saurer Katalysator eingesetzte(n) organische(n) Säure(n) enthält bevorzugt 1 bis 8 C-Atome, besonders bevorzugt 1 bis 6 C-Atome und ganz besonders bevorzugt 1 bis 4 C-Atome.

Bei dem organischen Rest dieser Säuren kann es sich um lineare, cyclische oder verzweigte Alkyl-, Alkenyl-, Aryl-, Aralkylreste handeln.

Die Säuren können einbasig, zweibasig oder dreibasige Säuren sein, wobei ein-oder zweibasige Säuren besonders bevorzugt sind.

Oberhalb von 8 C-Atomen ist im Allgemeinen die Säurestärke zu gering und die sterische Abschirmung zu hoch, um als wirksamer Katalysator verwendet werden zu können.

Gemäß einer bevorzugten Variante wird die als saurer Katalysator eingesetzte organische Säure aus der Gruppe, die aus Ameisensäure, Essigsäure, Propionsäure, Oxalsäure, Malonsäure, Maleinsäure, Bernsteinsäure, Anhydriden der genannten Säuren und Mischungen davon besteht, ausgewählt. Ganz besonders bevorzugt werden Ameisensäure, Essigsäure oder Oxalsäure sowie deren Mischungen verwendet.

Gemäß einer weiteren Variante der Erfindung wird die erfindungsgemäß als saurer Katalysator eingesetzte anorganische Säure bevorzugt aus der Gruppe, die aus Salpetersäure, Schwefelsäure, Phosphorsäure, Salzsäure, Borsäure, Flußsäure und deren Mischungen besteht, ausgewählt. Bevorzugt wird hierbei Salpetersäure und/oder Flußsäure verwendet.

Bevorzugt ist der basische Katalysator eine organische Base und besonders bevorzugt ein Amin. Hierbei kann es sich um primäre, sekundäre oder tertiäre Amine handeln.

Bei einer weiter bevorzugten Ausführungsform weist das Amin 1 bis 8, besonders bevorzugt 1 bis 6 und ganz besonders bevorzugt 1 bis 5 C-Atome auf.

Amine mit mehr als 8 C-Atomen sind sterisch oft zu anspruchsvoll, um als wirksame Katalysatoren eingesetzt werden zu können.

Gemäß einer bevorzugten Variante der Erfindung wird das Amin aus der Gruppe, die aus Dimethylethanolamin (DMEA), Monoethanolamin, Diethanolamin, Triethanolamin, Ethylendiamin (EDA), t-Butylamin, Monomethylamin, Dimethylamin, Trimethylamin, Monoethylamin, Diethylamin, Triethylamin, Pyridin, Pyridinderivat, Anilin, Anilinderivat, Cholin, Cholinderivat, Harnstoff, Harnstoffderivat, Hydrazinderivat und Mischungen davon besteht, ausgewählt.

Besonders bevorzugt werden als basischer aminischer Katalysator Ethylendiamin, Monoethylamin, Diethylamin, Monomethylamin, Dimethylamin, Trimethylamin, Triethylamin oder Mischungen davon verwendet.

Weiterhin bevorzugt ist als basischer Katalysator ein Aminosilan, das vorzugsweise aus der Gruppe, die aus 3-Aminopropyl-triethoxysilan (AMEO), 3-Aminopropyl-trimethoxysilan (AMMO), N-2-Aminoethyl-3-aminopropyltriethoxysilan (DAMEO), N-2-Aminoethyl-3-aminopropyl-triemthoxysilan (DAMO), N-2-Aminoethyl-3-aminomethylpropyl-triethoxysilan, Triamino-funktionelles Trimethoxysilan (Silquest A-1130), Bis-(gamma-trimethoxysilylpropyl)amin (Silquest A-1170), N-Ethyl-gamma-aminoisobutyltrimethoxysilan (Silquest A-Link 15), N-Phenyl-gamma-aminopropyltrimethoxysilan (Silquest Y-9669), 4-Amino-3,3-dimethylbutyltrimethoxysilan (Silquest Y-11637), N-Cyclohexylaminomethylmethyldiethoxysilan (GENIOSIL XL 924), (N-Cyclohexylaminomethyl)triethoxysilan (GENIOSIL XL 926), (N-Phenylaminomethyl)trimethoxysilan (GENIOSIL XL 973) und Mischungen davon besteht, ausgewählt wird.

Besonders bevorzugt werden als basischer Katalysator 3-Aminopropyl-triethoxysilan (AMEO), 3-Aminopropyltrimethoxysilan (AMMO), N-2-Aminoethyl-3-aminopropyl-triethoxysilan (DAMEO), N-2-Aminoethyl-3-aminopropyltriemthoxysilan (DAMO) oder Mischungen davon verwendet.

Selbstverständlich kann als basischer Katalysator auch eine Mischung aus mindestens einem Amin und mindestens einem Aminosilan eingesetzt werden.

Vorzugsweise wird die anorganische Base aus der Gruppe, die aus Ammoniak, Hydrazin, Natriumhydroxid, Kaliumhydroxid, Ammoniumhydroxid, Ammoniumcarbonat, Ammoniumhydrogencarbonat, Natriumcarbonat, Natriumhydrogencarbonat, Kaliumcarbonat, Kaliumhydrogencarbonat und Mischungen davon besteht, ausgewählt.

Besonders bevorzugt wird hierbei Ammoniak und/oder Hydrazin und ganz besonders bevorzugt Ammoniak verwendet.

Bei dem Siliciumoxid handelt es sich vorzugsweise um $SiO_2$. Durch Sol-Gel-Verfahren hergestelltes $SiO_2$ ist bekanntlich amorph. Es weist einen nicht unerheblichen Anteil an gebundenem Wasser auf. Dieses Wasser kann in das $SiO_2$ eingelagert sein. Weiterhin enthält das Siliciumoxid einen Anteil an nicht hydrolysierten Alkoxygruppen auf.

Zur Herstellung von Siliciumoxid vorzugsweise $SiO_2$, werden bevorzugt Alkoxysilane eingesetzt.

Bei dem erfindungsgemäß verwendeten Alkoxysilan handelt es sich vorzugsweise um Di-, Tri- und/oder Tetraalkoxysilane. Äußerst bevorzugt ist Tetraalkoxysilan. Bei Verwendung von Tetraalkoxysilan werden nach der Hydrolyse vier Silanolgruppen ausgebildet, die unter Kondensation einen hohen Vernetzungsgrad erzeugen, mithin eine Siliciumoxidbeschichtung, vorzugsweise $SiO_2$-Beschichtung, mit guter Barrierewirkung erzeugen. Bei Verwendung von Di- oder Trialkoxysilanen werden nach Hydrolyse entsprechend zwei oder drei Silanolgruppen ausgebildet, die unter Ausbildung eines Si-O-Si-Netzwerkes kondensieren können. Die Verwendung von Di- oder Trialkoxysilanen erlaubt die Einbringung von organischen Gruppen, beispielsweise von Alkylgruppen oder Polymeren in die Siliciumoxidbeschichtung unter Ausbildung einer anorganischorganischen Mischschicht. Die Di- oder Trialkoxysilane können auch als Organosiloxane bezeichnet werden.

Erfindungsgemäß wird unter Alkoxysilan jede monomere oder polymere Siliciumverbindung mit wenigstens einer Alkoxygruppe verstanden.

Vorteilhaft finden als Tetraalkoxysilan Tetramethoxysilan, Tetraethoxysilan, Tetraisopropoxysilan und Kondensate daraus oder deren Mischungen Verwendung.

Besonders vorteilhaft wird als Tetraalkoxysilan das Tetraethoxysilan und/oder Oligomere des Tetraethoxysilans eingesetzt.

Bei Verwendung von Alkoxysilan(en), vorzugsweise Tetraalkoxysilan(en), besteht der große Vorteil, dass hier keine Salze entstehen. Dies ist sowohl in ökologischer Hinsicht vorteilhaft als auch im Hinblick auf mögliche Agglomerationsprozesse während der Sol-Gel-Reaktion, da Salze die elektrostatische Stabilisierung der Pigmentteilchen stören.

Ein weiterer Vorteil besteht darin, dass im Gegensatz zur Verwendung von Siliciumhalogeniden keine Halogenide wie beispielsweise Chloridionen freigesetzt werden. Halogenidionen können bekanntlich die Korrosion von Metallen befördern.

Bei dem erfindungsgemäß verwendeten Siliciumhalogenid handelt es sich vorzugsweise um Di-, Tri- und/oder Tetrasiliciumhalogenide. Äußerst bevorzugt ist Siliciumtetrahalogenid. Die vorstehenden Ausführungen zu Di-, Tri- und/ oder Tetraalkoxysilanen gelten entsprechend.

Erfindungsgemäß wird unter Siliciumhalogenid jede monomere oder polymere Siliciumverbindung mit wenigstens einer Halogenidgruppe verstanden.

Als Siliciumhalogenide werden bevorzugt Tetrasiliciumhalogenide verwendet. Als Tetrasiliciumhalogenide werden vorzugsweise Tetrasiliciumfluorid, Tetrasiliciumchlorid, Tetrasiliciumbromid, Tetrasiliciumiodid oder deren Mischungen oder Mischhalogenide dieser Verbindungen verwendet.

Bevorzugt findet die Reaktion in einem Eintopfprozess statt. Hier werden die Metalleffektpigmente im organischen Lösungsmittel unter Rühren dispergiert, das Reaktionsgemisch vorzugsweise auf erhöhte Temperatur gebracht und Wasser hinzugegeben. Anschließend wird der erste Katalysator, d.h., je nach Verfahrensvariante Säure oder Base, hinzugegeben und nach einer ersten Reaktionszeit der zweite Katalysator, d.h., je nach Verfahrensvariante Base oder Säure, hinzugegeben. Das Gemisch wird eine zweite Reaktionszeit lang unter diesen Bedingungen belassen. Dann kann optional eine Zugabe von Oberflächenmodifizierungsmitteln erfolgen. Das Gemisch wird vorzugsweise auf Raumtemperatur abgekühlt und die beschichteten Metalleffektpigmente weitgehend vom Lösemittel getrennt unter Bildung eines Metalleffektpigmentfilterkuchens.

Ein wesentlicher Nachteil der herkömmlich angewandten basischen Sol-Gel-Beschichtung eines Metalleffektpigments ist die fehlende bzw. unzureichende Ausgewogenheit der Anwendungseigenschaften der so erhaltenen beschichteten Metalleffektpigmente, insbesondere hinsichtlich Deckvermögen und Korrosionsstabilität, in einem Anwendungsmedium, wie beispielsweise in einem pigmentierten Wasserlack.

Bekanntlich führt eine ungenügende Korrosionsstabilität eines Metalleffektpigmentes, insbesondere eines Aluminiumeffektpigments, in einem wässrigen Anwendungsmedium zur Reaktion mit dem Wasser unter Wasserstoffentwicklung und Auflösung des Metalleffektpigmentes. Bereits durch eine leichte Korrosion werden die optischen Eigenschaften, insbesondere der Spiegelglanz, beeinträchtigt.

Unter der Deckkraft oder dem Deckvermögen eines pigmentierten Mediums versteht man die Fähigkeit des pigmentierten Mediums, die Farbe oder die Farbunterschiede eines Untergrundes zu verdecken (DIN 55987).

Für das optische Erscheinungsbild eines Metalleffektpigmentes, insbesondere eines Aluminiumeffektpigments, sind dessen Teilchengröße und deren Verteilung, die sogenannte Teilchengrößenverteilung, ein wichtiges optisches Beurteilungskriterium für pigmentierte Applikationen.

Das das optische Erscheinungsbild einer Metalleffektpigmentpräparation, insbesondere einer Aluminiumeffektpigmentpräparation, charakterisierende Deckvermögen (bzw. die Deckkraft), auch als Opazität bezeichnet, nimmt

mit zunehmender Breite der Teilchengrößenverteilung zu, da dann zunehmend mehr Feinanteil enthalten ist. Das Deckvermögen bzw. die Deckkraft nimmt generell mit zunehmender Metalleffektpigmentfeinheit in der Metalleffektpigmentpräparation zu.

Die Metalleffektpigmente weisen vorzugsweise eine Teilchengrößenverteilung mit einem $D_{50}$-Wert von 2 bis 75 $\mu$m, weiter bevorzugt von 2 bis 30 $\mu$m und besonders bevorzugt von 2,5 bis 20 $\mu$m und ganz besonders bevorzugt von 2,5 bis 12 $\mu$m auf.

Je feiner die Metalleffektpigmente sind, desto größer ist bei den herkömmlichen Produkten der Verlust der Deckkraft im Vergleich zum unbeschichteten Ausgangsmaterial. Die erfindungsgemäßen Metalleffektpigmente weisen überraschenderweise insbesondere bei diesen relativ feinen Pigmenten die Verbesserung der Deckkraft auf.

Vorzugsweise wird das als Ausgangspigment bei dem erfindungsgemäßen Verfahren eingesetzte Metalleffektpigment in ein Alkoxysilan, vorzugsweiseTetraalkoxysilan, enthaltendes Lösemittelgemisch aus oder mit organischem Lösemittel und optional Wasser dispergiert. Die Zugabe des sauren Katalysators, vorzugsweise organische oder anorganische Säure(n), erfolgt bevorzugt nach der Dispergierung des Metalleffektpigments im organischen Lösemittel und optionalem Erwärmen der Dispersion auf Reaktionstemperatur. Das zur Hydrolyse benötigte Wasser kann bereits in dem organischen Lösemittel enthalten sein oder zu einem späteren Zeitpunkt zugegeben werden.

In das Reaktionsgemisch, das Metalleffektpigmente, Alkoxysilane, vorzugsweise Tetraalkoxysilane, Wasser und Säure(n) enthält, wird/werden sodann organische oder anorganische Base(n) als basischer Katalysator eingebracht, um die zweite Stufe des erfindungsgemäßen Verfahrens zu starten.

Als organische Lösemittel werden bevorzugt Alkohole, Glycole, Ester, Ketone sowie Mischungen dieser Lösemittel verwendet. Besonders bevorzugt ist die Verwendung von Alkoholen oder Glykolen oder deren Mischungen und ganz besonders bevorzugt ist die Verwendung von Alkoholen.

Als Alkohol finden vorteilhaft Methanol, Ethanol, Isopropanol, n-Propanol, t-Butanol, n-Butanol, Isobutylalkohol, Pentanol, Hexanol oder deren Mischungen, Verwendung.

Besonders bevorzugt werden Ethanol und/oder Isopropanol verwendet.

Als Glycol findet vorteilhaft Butylglykol, Propylglykol, Ethylenglykol oder Mischungen davon Verwendung.

Das vorliegende Reaktionsgemisch wird bevorzugt bei einer Temperatur, die in einem Bereich von 20°C bis zum Siedepunkt des jeweiligen Lösemittels oder Lösemittelgemisches liegt, zur Reaktion gebracht. Besonders bevorzugt liegt die Reaktionstemperatur in einem Bereich von 50°C bis zu einer Temperatur, die vorzugsweise 5°C unterhalb des Siedepunkts des jeweiligen Lösemittels oder Lösemittelgemisches, liegt. Ein bevorzugter Reaktionstemperaturbereich ist der von 75°C bis 82°C reichende Temperaturbereich.

Die Reaktionsdauer, für die erste und/oder zweite Stufe des erfindungsgemäßen Verfahrens, liegt bevorzugt jeweils in einem Bereich, der 2 bis 20 h, besonders bevorzugt 3 bis 8 Stunden, beträgt.

Das unter Anwendung des erfindungsgemäßen Verfahrens mit Siliciumoxid, vorzugsweise $SiO_2$, beschichtete Metalleffektpigment, vorzugsweise Aluminiumeffektpigment, kann optional mit einer dem jeweiligen Anwendungszweck angepassten Oberflächenmodifizierung versehen werden. Beispielsweise kann diese Oberflächenmodifizierung Silan enthalten oder aus Silan bestehen.

Beispiele für oberflächenmodifizierte Aluminiumeffektpigmente sind beispielsweise in DE 198 20 112 A1 ausführlich beschrieben, deren Inhalt hiermit unter Bezugnahme aufgenommen ist.

Bei den erfindungsgemäß hergestellten Pigmenten handelt es sich um mit $SiO_2$ beschichtete Metalleffektpigmente, die auch als Metallflakes bezeichnet werden, die vorzugsweise aus der Gruppe, die aus Aluminium, Eisen, Zink, Zinn, Silber, Gold, Edelstahl, Kupfer, Messing (Goldbronze), Titan und Legierungen und Mischungen dieser Metalle besteht, ausgewählt wird. Metalleffektpigmente sind plättchenförmige Metallpigmente, die durch Vermahlung von Metallgrieß oder mittels PVD-Verfahren (PVD: physikalische Dampfabscheidung) erhalten werden können. Die Metalleffektpigmente weisen einen mittleren Partikeldurchmesser auf, der vorzugsweise im Bereich von 1 $\mu$m bis 200 $\mu$m, weiter bevorzugt von 5 $\mu$m bis 150 $\mu$m liegt.

Bevorzugt handelt es sich bei den Metalleffektpigmenten um Aluminium, Eisen, Kupfer oder Messing (Goldbronze) und besonders bevorzugt um Aluminium.

Die Aluminiumeffektpigmente können vom "Cornflake"- oder vom "Silberdollar"-Typ sein.

Besonders vorteilhaft ist die Verwendung von Aluminiumeffektpigmenten gemäß der Offenbarung der DE 103 157 15 A1 und DE 10 2006 062271, deren Inhalte hiermit unter Bezugnahme aufgenommen sind. Derartige auch als "Platindollar®" oder "Silvershine® S" bezeichnete Aluminiumeffektpigmente werden durch Nassvermahlung hergestellt und sind in ihren Pigmenteigenschaften wie mittlerer Dicke und Dickenverteilung nahezu vergleichbar mit PVD-Aluminiumeffektpigmenten. Im Unterschied zu PVD-Aluminiumeffektpigmenten weisen diese durch Nassvermahlung erhaltenen "Platindollar"- oder "Silvershine"-Aluminiumeffektpigmente keine absolut ebene Oberfläche auf, wie dies bei PVD-Aluminiumeffektpigmenten der Fall ist. PVD-Aluminiumeffektpigmente weisen des Weiteren relativ gerade Bruchkanten auf, wohingegen die durch Nassvermahlung erhaltenen Aluminiumeffektpigmente einen irregulär geformten Randbereich aufweisen, der auch als ausgefranster Randbereich bezeichnet werden kann.

Besonders vorteilhaft sind Metalleffektpigmente, bevorzugt Aluminiumeffektpigmente, mit einer über Dickenauszählung mit Rasterelektronenmikroskopie ermittelten mittleren Dicke $h_{50}$ von 15 bis unter 100 nm und eine über Dickenauszählung mit Rasterelektronenmikroskopie ermittelten relativen Breite der Dickenverteilung $\Delta h$, welche anhand der entsprechenden Summenhäufigkeitskurve der relativen Häufigkeiten nach der Formel $\Delta = 100x\ (h_{90}-h_{10})\ /\ h_{50}$ berechnet wird, von 30 % bis 140% einsetzbar, wie in DE10315715 A1 und DE 102006062271 offenbart.

Die Summenhäufigkeitskurve wird auch als Summendurchgangskurve bezeichnet.

Eine weiterhin bevorzugte Ausführungsform betrifft PVD-Metalleffektpigmente, vorzugsweise PVD-Aluminiumeffektpigmente, die mit dem erfindungsgemäßen Verfahren unter Bereitstellung erfindungsgemäßer Metalleffektpigmente mit Siliciumoxid beschichtet werden können.

Das mit Siliciumoxid, vorzugsweise $SiO_2$, beschichtete und optional oberflächenmodifizierte Metalleffektpigment, vorzugsweise Aluminiumeffektpigment, wird aus dem Reaktionsgemisch abgetrennt und kann sodann seiner bestimmungsgemäßen Verwendung zugeführt werden. Beispielsweise kann das erfindungsgemäße Metalleffektpigment als Pulver oder Paste weiterverarbeitet werden und danach in Farben, Druckfarben, Lacke, Kunststoffe, Kosmetika, etc. eingebracht werden.

Ein weiterer Gegenstand dieser Erfindung ist ferner ein mit Siliciumoxid beschichtetes Metalleffektpigment, welches als Pulver, Trockenpräparat oder Paste vorliegt und sich dadurch auszeichnet, dass in und/oder auf der Siliciumoxidschicht und/oder im Lösemittel der Paste 0,01 - 1 Gew.-% organische und/oder anorganische Säure und 0,01 - 1 Gew.-% organische und/oder anorganische Base vorliegt, wobei sich die Gew.-% Angaben auf das Gesamtgewicht des Pigments beziehen.

Das erfindungsgemäße Trockenpräparat kann beispielsweise als Granulat, Pellets, Würstchen, Tabletten, Briketts, etc. vorliegen. Das Trockenpräparat kann als staubarme oder staubfreie Metalleffektpigmentpräparation vorliegen. Die Restfeuchte kann dabei in einem Bereich von 0,5 bis zu 29 Gew.-%, vorzugsweise bis 1 zu 24 Gew.%, weiter bevorzugt von 3 bis zu 14 Gew.-%, noch weiter bevorzugt von 4 bis zu 9 Gew.-%, betragen, wobei sich diese Angaben jeweils auf das Gesamtgewicht des Trockenpräparates beziehen. Das Trockenpräparat enthält vorzugsweise noch Bindemittel, in der Regel organische(s) Polymer(e) und/oder Harz(e), sowie optional Additiv(e). Der Gehalt an Bindemittel in dem Trockenpräparat liegt vorzugsweise in einem Bereich von 0,5 bis 20 Gew.% und besonders bevorzugt von 1 bis 5 Gew.-%, jeweils bezogen auf das Gesamtgewicht des Trockenpräparates.

Die Säuren und/oder Basen können dabei zumindest teilweise in ionischer Form, z.B. als ein Salz vorliegen. Die Basen können auch zumindest teilweise in Form eines Salzes mit den sauren Silanolgruppen (Si-OH) vorliegen.

Diese Merkmale sind zwingende Folge des erfindungsgemäßen Verfahrens. Besonders bevorzugt beträgt die Konzentrationen der organischen und/oder anorganischen Säure und der organischen und/oder anorganischen Base unabhängig voneinander 0,015 - 0,5 Gew.-% und ganz besonders bevorzugt 0,015 - 0,2 Gew.-%, bezogen auf das Gesamtgewicht des Pigments. Aufgrund des zweistufigen erfindungsgemäßen Verfahrens finden sich in und/oder auf der Siliciumoxidschicht sowohl Säure und/oder Säureanionen als auch Basen. Bei diesen Komponenten handelt es sich um in der Siliciumoxidschicht eingeschlossene und/oder adsorbierte Katalysatorrückstände.

Bevorzugt befinden sich die Säuren und Basen überwiegend in der $SiO_2$-Schicht Wenn das erfindungsgemäße Metalleffektpigment als Paste vorliegt, können die Säuren und/oder Base auch weitgehend im Lösemittel dieser Paste vorliegen. So kann das Lösemittel der Paste auch die Säuren und/oder Basen, die zunächst überwiegend in der $SiO_2$-Schicht vorliegen, aus dieser herauslösen. Dies kann insbesondere nach einer gewissen Lagerzeit des erfindungsgemäßen Metalleffektpigments der Fall sein, wobei es nachfolgend zu einer oberflächlichen Adsorption der Säure und/oder Base an die $SiO_2$-Schicht kommen kann.

Unter Paste wird im Rahmen dieser Erfindung eine Mischung enthaltend das erfindungsgemäß beschichtete Metalleffektpigment und ein Lösemittel verstanden, wobei der Gehalt an Metalleffektpigment vorzugsweise 5 bis 80 Gew.-% und der Gehalt an Metalleffektpigment und dem Lösemittel vorzugsweise mindestens 95 Gew.-% bezogen auf die Paste, beträgt.

In Abhängigkeit von der Beschaffenheit, insbesondere von der spezifischen Oberfläche sowie der Oberflächeneigenschaften, des mit Siliciumoxid beschichteten Metalleffektpigmentes und gegebenenfalls von der Art des Lösemittels kann die Präparation als Trockenpräparation oder als Paste vorliegen.

Der Gehalt an Metalleffektpigment in der Paste hängt stark von seiner spezifischen Oberfläche ab. Will man sehr dünne Metalleffektpigmente mit mittleren Dicken unter 100 nm, wie beispielsweise PVD-Pigmente, in eine pastöse Form bringen, so ist hierzu ein sehr hoher Lösemittelanteil nötig. Demzufolge beträgt der Gehalt derartiger Pigmente bevorzugt 5 bis 30 Gew.-% und besonders bevorzugt 10 bis 20 Gew.-%, bezogen auf das Gesamtgewicht der Paste. Derartige Pasten sind stets als Vorprodukt für die spätere Anwendung des Metalleffektpigments zu betrachten.

Für dickere Metalleffektpigmente mit mittleren Dicken > 100 nm sind im allgemeinen Metallpigmentgehalte von über 20 bis 80 Gew.%, bevorzugt 30 bis 75 Gew.-% und besonders bevorzugt 50 bis 70 Gew.-%, jeweils bezogen auf das Gesamtgewicht der Paste, ausreichend.

Die Paste kann noch weitere Bestandteile wie beispielsweise Additive enthalten. Der Anteil weiterer Komponenten ist jedoch gering, da es sich hier nicht um eine Endanwendung (Formulierung) handelt. Mithin liegt der Gehalt an Metalleffektpigment und dem Lösemittel in der Paste bevorzugt bei mindestens 97 Gew.-% und besonders bevorzugt

bei mindestens 98 Gew.-%, jeweils bezogen auf die Paste.

Als Lösemittel enthält die Paste bevorzugt in der Lack- und Druckfarbenindustrie geläufige Lösemittel. Da der Hauptverwendungszweck der erfindungsgemäßen Metalleffektpigmente wasserbasierende Lacke oder Druckfarben sind, sind Pasten besonders bevorzugt, bei denen das Lösemittel Wasser enthält oder daraus besteht. Der Wasseranteil der erfindungsgemäßen Paste beträgt bevorzugt 20 bis 100 Gew.-%, weiter bevorzugt 30 bis 90 Gew.-% und besonders bevorzugt 40 bis 80 Gew.-%, bezogen auf das Gewicht des Lösemittels in der Paste. Derartige Pasten sind aufgrund ihres niedrigen VOC-Anteils aus ökologischen Gründen besonders bevorzugt.

Die in der Siliciumoxidschicht enthaltenen Rückstände betragen in der Regel nicht mehr als jeweils 1 Gew.-%. Dies ist darauf zurückzuführen, dass die Reaktion, wie oben beschrieben, in einem Gemisch aus organischem Lösemittel und Wasser erfolgt. In diesem Lösemittelgemisch wird in der Regel der größte Anteil der als Säure und/oder Base eingesetzten Katalysatoren gelöst. Der im Pigment eingeschlossene Anteil an Katalysator entspricht daher nur einem kleinen Anteil des insgesamt eingesetzten Katalysators.

Unter der organischen Säure bzw. deren Anionen werden keine langkettigen Fettsäuren, d.h. gesättigte oder ungesättigte Fettsäuren mit 12 bis 30 C-Atomen oder mit 14 bis 22 C-Atomen verstanden. Derartige Fettsäuren werden als Schmiermittel bei der Vermahlung von Metallpigmenten eingesetzt. Damit enthält herstellungsbedingt jedes durch Vermahlung hergestellte Metalleffektpigment diese Fettsäuren. Während der $SiO_2$-Beschichtung werden die an der Metalloberfläche gebundenen Fettsäuren weitgehend abgelöst. Sie können jedoch in gewissen Teilen in die $SiO_2$Schicht eingebaut werden oder nach Abschluss der Beschichtung an der Pigmentoberfläche adsorbieren.

Diese langkettigen Fettsäuren werden jedoch aufgrund ihrer geringen Säurestärke und aufgrund der hohen sterischen Abschirmung nicht als Katalysatoren bei Sol-Gel-Verfahren zur Herstellung von $SiO_2$-Schichten eingesetzt.

Somit werden erfindungsgemäß unter den Säuren und Basen, die in und/oder auf der Siliciumoxidschicht in den angegebenen Mengenverhältnissen vorhanden sind, nur diejenigen verstanden, die bei Sol-Gel-Verfahren als Katalysator bei der Abscheidung von Siliciumoxid verwendet werden.

Als Säuren oder Base sind jene Verbindungen bevorzugt, die oben stehend bereits genannt wurden.

Im Fall der Aminosilane als basischer Katalysator ist zu beachten, dass diese gewöhnlicherweise auch als Oberflächenmodifizierungsmittel verwendet werden, um ein gute Anbindung des Metalleffektpigments an das Bindemittel zu ermöglichen. Hierfür werden jedoch gewöhnlicherweise Mengen von mindestens 1 Gew.-% bezogen auf das Metalleffektpigment eingesetzt.

Der analytische Nachweis der Basen und/oder Säuren erfolgt bevorzugt mittels Gaschromatographie und Massenspektroskopie. Hierbei wird in bevorzugter Weise das beschichtete Metalleffektpigment in geeignetem organischen Lösemittel aufgenommen, mindestens 15 min lang im Ultraschallbad bei Raumtemperatur oder leicht erhöhter Temperatur behandelt und mit beispielsweise Hexadecan als internem Standard versetzt. Der Feststoff wird abzentrifugiert und die überstehende Lösung als Injektionslösung für den Gaschromatographen verwendet. Gegebenenfalls kann die überstehende Lösung auch in geeigneter Weise eingeengt werden, falls die Konzentration der zu detektierenden Säure oder Base andernfalls zu gering ist.

Sind die nachzuweisenden Säuren und/oder Basen nicht bekannt, so erfolgt die qualitative Detektion bevorzugt mittels GC/MS. Dabei ist bevorzugt eine mittelpolare Säule zu verwenden. Diese mit DB5 benannten Säulen sind typischerweise mit 5% Diphenal und 95 % Dimethylpolysiloxan belegt.

Sind die zu detektierenden Substanzen bekannt, so kann deren quantitative Bestimmung mittels Gaschromatographie erfolgen. Hierbei wird bevorzugt eine unpolare Säule verwendet. Die Eichung erfolgt in üblicher dem Fachmann bekannter Weise. Diese mit DB1 benannten Säulen sind typischerweise mit 100% Dimethylpolysiloxan belegt. Als Detektionssystem ist ein Flammenionisationsdetektor (FID) geeignet. Die genauen Parameter zur Einstellung des Gaschromatographen (z.B Säulenlänge und -breite, Säulendruck etc.) sind dem Fachmann bekannt.

Als Gaschromatograph wird bevorzugt ein GC/FID Autosystem XL (Fa. Perkin Elmer) verwendet.

Die Säuren und Basen können auch mittels anderer massenspektrometrischer Methoden wie beispielsweise TOF-SIMS ermittelt werden. Hierbei ist ggf. ein kontinuierliches Absputtern der Probe nötig, um auch die in der $SiO_2$-Schicht befindlichen Katalysatorrestmengen detektieren zu können. Die Methode ist bevorzugt anwendbar im Fall der Verwendung von Aminosilanen als basischer Katalysator, da diese naturgemäß kovalent mit der $SiO_2$-Schicht verbunden sind und nicht durch Extraktion aus dieser herauszulösen sind.

Die erfindungsgemäß mit Siliciumoxid beschichteten Metalleffektpigmente finden Verwendung in Kosmetika, Kunststoffen und Beschichtungszusammensetzungen, vorzugsweise Farben, Druckfarben, Lacken oder Pulverlacken.

Besonders bevorzugt sind hierbei Wasserlacke, wässrige Druckfarben oder Kosmetika.

Die erfindungsgemäß mit Siliciumoxid beschichteten Metalleffektpigmente werden in ihre jeweiligen Anwendungsmedien in üblicher Weise eingearbeitet. Mit diesen so pigmentierten Anwendungsmedien kann dann ein Gegenstand beschichtet werden. Bei diesem Gegenstand kann es sich beispielsweise um eine Karosserie, ein Fassadenelement, etc. handeln.

Im Fall von Kunststoffen kann das erfindungsgemäße Metallpigment auch in das Anwendungsmedium in Masse eingefärbt sein. Die Gegenstände weisen die erfindungsgemäß mit Siliciumoxid beschichteten Metalleffektpigmente

auf und/oder enthalten sie.

Die folgenden Beispiele und die Figur 1 erläutern die Erfindung näher, ohne die Erfindung jedoch zu beschränken:

**Figuren**

Figur 1 zeigt das Deckvermögen (Deckkraft oder Deckfähigkeit) der gemäß den erfindungsgemäßen Beispielen 1 bis 3 und den Vergleichsbeispielen 4 bis 6 beschichteten Aluminiumeffektpigmente sowie im Vergleich zu dem unbeschichteten Ausgangspigment Stapa Metallux 3580 (Vergleichsbeispiel 7).

**Erfindungsgemäßes Beispiel 1:**

150 g einer handelsüblichen Aluminiumeffektpigmentpaste der Typenreihe STAPA METALLUX 3580 der Fa. Eckart GmbH, Hartenstein, Deutschland, mit einer Größenverteilung von $d_{10}$= 7,5 μm, $d_{50}$= 12,1 μm, $d_{90}$= 18,7 μm und einem Feststoffgehalt von 60 Gew.-%, bezogen auf das Gesamtgewicht der Paste, wurden in 400 ml Ethanol bei Raumtemperatur dispergiert. Nach 30 Minuten wurden 30 g Tetraethoxysilan und 2,0 g Oxalsäure in 54 g Wasser unter Erwärmung der Mischung auf 78°C und weiterer Temperierung bei dieser Temperatur innerhalb von 3 h kontinuierlich zugegeben. Nach einer Rührzeit von weiteren 2 h ohne weitere Zugabe wurde der Ansatz weitere 3 h gerührt, und dabei wurde jede Stunde eine Lösung von 1,0 g Ethylendiamin (EDA) in 13 g Isopropanol zugegeben. Nach Ablauf der Sol-Gel-Reaktion wurden zur organisch-chemischen Nachbeschichtung 1,2 g Dynasylan AMMO, erhältlich bei Degussa AG, Rheinfelden, Deutschland, zugegeben und der Ansatz für 1 h gerührt. Anschließend wurde das Reaktionsgemisch auf Raumtemperatur abgekühlt und über einen Büchnertrichter abgenutscht.

**Quantitative Bestimmung von Resten Carbonsäure bzw. Amin:**

Die Bestimmung von Carbonsäure erfolgt mittels Gaschromatographie mit internem Standard. Dafür wurde eine Probe der beschichteten Metalleffektpigmentpaste im Fall der Carbonsäurebestimmung mit einer definierten Menge Aceton und im Fall der Aminbestimmung in einer definierten Menge Ethanol aufgenommen, 15 min lang im Ultraschallbad behandelt und mit Hexadecan als internem Standard versetzt. Der Feststoff wurde abzentrifugiert und die überstehende Lösung als Injektionslösung für den Gaschromatographen (GC/FID Autosystem XL (Perkin Elmer)) verwendet. Der Gehalt an Carbonsäure wurde mit folgenden Rahmenparametern analysiert:

Säule: 30 m OV 101 0,53 mm
Temperaturprogramm: 45°C 1 min isotherm 5°C/min 180°C
Injektionboard: 250°C
Detektor: 320°C

**Quantitative Bestimmung von EDA:**

Die Probe wurde in gleicher Weise präpariert wie oben angegeben. Der Gaschromatograph (GC/FID Autosystem XL (Perkin Elmer)) wurde mit folgendem Rahmenparametern ausgestattet:

Säule: 30 m OV 101 0,53 mm
Temperaturprogramm: 75°C 10°C/min 200°C
Injektionboard: 250°C
Detektor: 320°C

Es wurden jeweils 0,02 Gew.-% Oxalsäure und EDA, bezogen auf das Gewicht des beschichteten Aluminiumpigments, nachgewiesen.

**Erfindungsgemäßes Beispiel 2:**

150 g einer handelsüblichen Aluminiumpigmentpaste der Typenreihe STAPA METALLUX 3580 der Fa. Eckart GmbH, Hartenstein, Deutschland, mit einer Größenverteilung von $d_{10}$= 7,5 μm, $d_{50}$= 12,1 μm, $d_{90}$= 18,7 μm und einem Feststoffgehalt von 60 Gew.-%, bezogen auf das Gesamtgewicht der Paste, wurden in 400 ml Ethanol bei Raumtemperatur dispergiert. Nach 30 Minuten wurden 30 g Tetraethoxysilan und 1,0 g Essigsäure in 30 g Wasser zugegeben und die Mischung auf 78°C erwärmt und weiter bei dieser Temperatur temperiert. Nach einer Rührzeit von weiteren 2 h wurde eine weitere Mischung von 1,0 g Essigsäure in 24 g Wasser zugesetzt. Nach einer weiteren Rührzeit von 2 h

wurde der Ansatz für weitere 3 h gerührt und dabei wurde jede Stunde eine Lösung von 1,0 g Ethylendiamin in 13 g Isopropanol zugegeben. Nach Ablauf der Sol-Gel-Reaktion wurden zur organisch-chemischen Nachbeschichtung 1,2 g Dynasylan AMMO, erhältlich bei Degussa AG, Rheinfelden, Deutschland, zugegeben und der Ansatz für 1 h gerührt. Anschließend wurde das Reaktionsgemisch auf Raumtemperatur abgekühlt und über einen Büchnertrichter abgenutscht.

Der Gehalt des Pigments an Resten Essigsäure und EDA wurde nach der oben beschriebenen Methode ermittelt. Es wurden jeweils 0,02 Gew.-% Essigsäure und EDA, bezogen auf das Gewicht des beschichteten Aluminiumpigments, nachgewiesen.

**Erfindungsgemäßes Beispiel 3:**

150 g einer handelsüblichen Aluminiumpigmentpaste der Typenreihe STAPA METALLUX 3580 der Fa. Eckart GmbH, Hartenstein, Deutschland, mit einer Größenverteilung von $d_{10}$= 7,5 $\mu$m, $d_{50}$= 12,1 $\mu$m, $d_{90}$= 18,7 $\mu$m und einem Feststoffgehalt von 60 Gew.%, bezogen auf das Gesamtgewicht der Paste, wurden in 400 ml Ethanol bei Raumtemperatur dispergiert. Nach 30 Minuten wurden 30 g Tetraethoxysilan und eine Lösung aus 1,0 g Ethylendiamin in 13 g Isopropanol zugegeben und die Mischung auf 78 °C erwärmt und bei dieser Temperatur temperiert. Es wurde zunächst 2 h gerührt, und anschließend wurde zu der Mischung eine Lösung von 1,0 g Ethylendiamin in 13 g Isopropanol zugegeben. Nach 1 h wurde in die Mischung eine Lösung von 2,0 g Oxalsäure in 54 g Wasser kontinuierlich über einen Zeitraum von 30 min zugegeben. Nach Ablauf der Sol-Gel-Reaktion wurden zur organisch-chemischen Nachbeschichtung 1,2 g Dynasylan AMMO, erhältlich bei Degussa AG, Rheinfelden, Deutschland, zugegeben. Die erhaltene Pigmentmischung wurde auf Raumtemperatur abgekühlt und über einen Büchnertrichter abgenutscht.

Der Gehalt des Pigments an Resten Oxalsäure und EDA wurde nach der oben beschriebenen Methode ermittelt. Es wurden jeweils 0,02 Gew.% Oxalat und EDA, bezogen auf das Gewicht des beschichteten Aluminiumpigments, nachgewiesen.

**Vergleichsbeispiel 4:**

150 g von der in den erfindungsgemäßen Beispielen 1 bis 3 eingesetzten Aluminiumeffektpigmentpaste STAPA METALLUX 3580 wurden in 300 ml Isopropanol bei Raumtemperatur dispergiert. Nach 30 Minuten wurden 30g Tetraethoxysilan zugegeben und die Mischung auf 78°C erwärmt und bei dieser Temperatur temperiert. Anschließend wurde eine Lösung von 1,0 g Ethylendiamin in 27g Wasser zugesetzt und das Reaktionsgemisch eine Stunde lang gerührt. Anschließend wurde eine Lösung von 1,0 g Ethylendiamin mit 18,6 g Isopropanol in das Reaktionsgemisch gegeben und eine Stunde lang gerührt. Abschließend wurde noch einmal eine Lösung von 1,0 g Ethylendiamin mit 18,6 g Isopropanol in das Reaktionsgemisch eingebracht und das Reaktionsgemisch wurde sodann 4 Stunden lang bei 78°C gerührt. Nach Ablauf der Sol-Gel-Reaktion wurden zur organisch-chemischen Nachbeschichtung 1,2 g Dynasylan AMMO, erhältlich bei Degussa AG, Rheinfelden, Deutschland zugegeben. Die erhaltene Metalleffektpigmentmischung wurde auf Raumtemperatur abgekühlt und über einen Büchnertrichter abgenutscht.

Bei dem verwendeten Ausgangsmaterial handelt es sich um ein Aluminiumeffektpigment mit einem relativ großen Feinanteil, der nur sehr schwer mit den konventionell bekannten $SiO_2$-Beschichtungsverfahren gasungsstabil zu beschichten ist.

Der Gehalt des Pigments an Resten Carbonsäure und EDA wurde nach der oben beschriebenen Methode ermittelt. Es wurde 0,02 Gew.-% EDA, bezogen auf das Gewicht des beschichteten Aluminiumpigments, nachgewiesen. Der Gehalt an Carbonsäuren lag unterhalb der Nachweisgrenze (ca. 0,01 Gew.-%).

**Vergleichsbeispiel 5:**

150 g der in den erfindungsgemäßen Beispiel 1 bis 3 sowie dem Vergleichsbeispiel 4 eingesetzten Aluminiumeffektpigmentpaste STAPA METALLUX 3580 wurden in 300 ml Isopropanol bei Raumtemperatur dispergiert. Nach 30 Minuten wurden 30 g Tetraethoxysilan und 1,8 g Eisessig in 28 g Wasser zugegeben und die Mischung auf 78°C erwärmt und bei dieser Temperatur temperiert. Anschließend wurde die Suspension vier Stunden lang gerührt. Nach Ablauf der Sol-Gel-Reaktion wurden zur organisch-chemischen Nachbeschichtung 1,4 g Dynasylan AMMO, erhältlich bei Degussa AG, Rheinfelden, Deutschland, zugegeben. Die erhaltene Pigmentmischung wurde auf Raumtemperatur abgekühlt und über einen Büchnertrichter abgenutscht.

Der Gehalt des Pigments an Resten Essigsäure und EDA wurde nach der oben beschriebenen Methode ermittelt. Es wurde 0,02 Gew.-% Essigsäure, bezogen auf das Gewicht des beschichteten Aluminiumpigments, nachgewiesen. Der Gehalt an EDA lag unterhalb der Nachweisgrenze (ca. 0,01 Gew.-%).

**Vergleichsbeispiel 6:**

Hier wurde wie im Vergleichsbeispiel 5 verfahren, jedoch wurde zunächst nur 1,0 g Eisessig in 15 ml Wasser zugegeben und anschließend die Mischung auf 78°C erwärmt und bei dieser Temperatur temperiert. Nach 45 min wurde zusätzlich 1,0 g Eisessig in 15 ml Wasser zugegeben.

**In Tabelle 1** sind die anwendungstechnischen Eigenschaften hinsichtlich Gasungsstabilität und Deckkraft (Deckvermögen) von nach erfindungsgemäßem Sol-Gel-Verfahren (Beispiel 1 bis 3) und herkömmlichem Sol-Gel-Verfahren (Vergleichsbeispiele 4 bis 6) mit $SiO_2$ beschichteten Aluminiumeffektpigmenten (Feinheit $D_{50}$ 18 - 20 μm) in einem wässrigen Lacksystem angegeben.

**Gasungstest:**

Alle beschichteten Metalleffektpigmente wurden einem Gasungstest unterzogen. Für den Gasungstest wurden 8,6 g beschichtetes Al-Pigment in Form einer Paste in 315 g farblosen Wasser-Mischlack (ZW42-1100, Fa. BASF Würzburg) eingearbeitet und mit Dimethanolethanolamin auf einen pH-Wert von 8,2 gebracht. Von diesem Lack wurden 300 g in eine Gaswaschflasche eingefüllt und diese mit einem Doppelkammergasblasenzähler verschlossen. Das entstandene Gasvolumen wurde anhand des verdrängten Wasservolumens in der unteren Kammer des Gasblasenzählers abgelesen. Die Gaswaschflasche wurde in einem Wasserbad bei 40°C temperiert und der Test über maximal 30 Tage durchgeführt. Bei einer Entwicklung von maximal 10,5 ml Wasserstoff nach 30 Tagen gilt der Test als bestanden.

Die Testergebnisse sind in Tabelle 1 dargestellt.

**Deckkraft:**

Zur Bewertung des Deckvermögens (Deckkraft) der Aluminiumeffektpigmente der Beispiele und Vergleichsbeispiele wurden von diesen Rakelabzüge (Pigmentierung 1 bis 5 Gew.-% in Erco Bronzemischlack RE 2615 Farblos, Nassschichtdicke: 50 μm) auf einer handelsüblichen schwarz-weißen Deckungskarte (Typ24/5, 250cm$^3$, Erichsen GmbH & Co KG, Hemer-Sundwig) angefertigt und anschließend eine Farbmessung mit einem handelsüblichen Messgerät der Fa. X-Rite bei einem Betrachtungswinkel von 110° und bei einem Licht-Einfallswinkel von 45° durchgeführt. Als Maß für die Deckung wurde der Quotient der Helligkeitswerte bei diesem Messwinkel von der schwarzen zur weißen Seite der Deckungskarte. Diese Größe ist als Funktion der eingesetzten Pigmentmenge in Fig. 1 für die verschiedenen Proben graphisch dargestellt. Hier wurde zusätzlich noch das unbeschichtete Aluminiumeffektpigment als Vergleichsbeispiel 7 aufgenommen. Je näher dieses Verhältnis der gemessenen Helligkeiten dem Wert 1 annähert, desto besser ist die Deckung. Als Maßzahl wurde die Konzentration genommen, bei der die Kurven der Fig. 1 den Helligkeitsverhältniswert von 0,8 schneiden (Deckfähigkeitsmaßzahl $c_{0,8}$). Diese Werte sind ebenfalls in Tab. 1 aufgeführt.

Ferner wurde mittels Lasergranulometrie in üblicher Weise die Größenverteilung der Aluminiumeffektpigmente der Beispiele und Vergleichsbeispiele ermittelt Hierbei wurde ein Cilas 1064 Gerät verwendet (Fa. Cilas, Frankreich). In Tab. 1 sind die üblichen Kennwerte $d_{10}$- (Feinanteil), $d_{50}$- (Mittelwert) und $d_{90}$-Werte (Grobanteil) der entsprechenden Summendurchgangskurve dargestellt. Diese Werte stellen volumengemittelte Werte von Äquivalentkugeln dar.

Weiterhin wurden die Partikelgrößen mittels eines Accusizer, Fa. Particle Sizing Systems, Santa Barbara, Kalifornien, USA), vermessen. Hier erhält man eine zahlengemittelte Auswertung, was den Feinanteil in einer Pigmentverteilung deutlicher hervortreten lässt als bei der Volumenmittlung, die naturgemäß größere Teilchen überbewertet. Man kann aus den Messungen die Anzahl der gesamten vermessenen Partikel pro g berechnen. Diese Größe ist ebenfalls in Tabelle 1 dargestellt.

Zur Ermittlung dieser Daten ging man wie folgt vor:

Für die Messung im Accusizer 780 APS wurde eine Probenmenge in ca. 100 g filtriertem Isopropanol dispergiert. Dabei wurde die Probenmenge so gewählt, dass die Partikelkonzentration ca. 2000 Partikel/1 mL betrug. Nachdem sich eine homogene Suspension gebildet hatte, wurde die Lösung für 2 min im Ultraschallbad dispergiert und unmittelbar danach im Accusizer 780 APS nach folgenden Einstellungen vermessen:

Diluent Flow Rate: 60ml/min
Data collection time: 60s
Syringe Pump 3-way port
Flow pump normal speed factor 1030

Die Partikelzahl pro Gramm-Probe errechnete sich durch

$$\text{Anzahl Partikel (\#/ g Probe)} = \frac{\text{Konzentration (\#/mL) x Einwaage Isopropanol (g)}}{\text{Dichte Isopropanol (g/mL) x Einwaage Probe (g)}}$$

Tabelle 1

| Probe | $D_{10}/D_{50}/D_{90}$ in µm Cilas 1064 | Anzahl Partikel/g Accusizer | Gehalt $SiO_2$ /(%) bezogen auf Aluminium | Gasungstest nach 30 d / ml | Deckfähigkeitsmaßzahl $c_{0,8}$ in Gew.-% |
|---|---|---|---|---|---|
| Beispiel 1 | 8,9/14,0/20,4 | 6,9 x $10^9$ | 7,6 | 8 | 4,0 |
| Beispiel 2 | 8,4/13,5/20,1 | 7,4 x $10^9$ | 7,6 | 6 | 4,0 |
| Beispiel 3 | 10,8/17,5/26,3 | 4,0 x $10^9$ | 9,6 | 9 | 4,5 |
| Vergleichsbeispiel 4 | 9,9/15,2/21,7 | 3,7 x $10^9$ | 8,1 | > 10,5 ml nach 10-12d | 4,6 |
| Vergleichsbeispiel 5 | 8,7/14,5/22,2 | 4,9 x $10^9$ | 6,6 | > 10,5 ml nach 25 d | 4,3 |
| Vergleichsbeispiel 6 | 8,0/13,0/19,4 | 5,2 x $10^9$ | 6,8 | > 10,5 ml nach 28 d | 4,8 |

Aus Tabelle I ist deutlich zu entnehmen, dass die nach dem erfindungsgemäßen Sol-Gel-Verfahren hergestellten Aluminiumeffektpigmente (Beispiele 1 bis 3) ein wesentlich höheres Deckvermögen bei sehr guter Gasungsstabilität als die nach dem herkömmlichen Sol-Gel-Verfahren hergestellten Aluminiumeffektpigmente (Vergleichsbeispiele 4 bis 6) aufweisen. Die Deckung der Aluminiumeffektpigmente des Vergleichsbeispiels 5 (saure Katalyse) war ähnlich gut wie beim erfindungsgemäßen Aluminiumeffektpigment des Beispiels 3. Jedoch war in diesem Fall die Gasungsstabilität nicht gegeben. Dies ist möglicherweise - wie auch bei den Pigmenten im Vergleichsbeispiel 6 - auf den relativ geringen $SiO_2$-Gehalts des Pigments zurückzuführen, der auf eine verhältnismäßig schlechte Umsetzungsrate der Sol-Gel-Reaktion schließen lässt. Die Aluminiumeffektpigmente der (erfindungsgemäßen) Beispiele 1 und 2 wiesen sowohl die beste Deckfähigkeit als auch die beste Gasungsstabilität auf.

Dies zeigt deutlich, dass die Aufgabe der Erfindung am besten gelöst wird, indem die Katalyse des Sol-Gel-Prozess zur Siliciumoxidbeschichtung zuerst in saurem und anschließend in basischem Medium erfolgt.

Die mittels der Accusizermessungen ermittelte Anzahl der Partikel pro g korreliert recht gut zur Deckfähigkeitsmaßzahl $c_{0,8}$. Je mehr Partikel vorhanden sind, desto größer ist die Deckfähigkeit. Offenbar ist bei diesen Proben ein erhöhter Feinanteil vorhanden.

Dies spiegelt sich nur unvollkommen in den $d_{10}$-Werten der mittels Cilas 1064 Größenverteilung wieder. Offenbar ist diese Methode aufgrund der inhärenten Vernachlässigung des Feinanteils weniger gut geeignet, derartige Unterschiede zu detektieren.

Obgleich nicht genau geklärt ist, warum die nach dem erfindungsgemäßen Verfahren hergestellten beschichteten Aluminiumeffektpigmente eine verbesserte Deckkraft und zugleich eine sehr gute Gasungsstabilität aufweisen, wird vermutet, dass bei der erfindungsgemäßen Verfahrensweise zunächst ein langsames Aufwachsen einer kompakten $SiO_2$-Schicht im Hinblick auf die langsame Hydrolyse der Alkoxysilane und/oder der Siliciumhalogenide erfolgt, wodurch zum einen eine sehr gasungsstabile Siliciumoxidbeschichtung ausgebildet wird und zum anderen der Feinanteil der Metalleffektpigmentpräparation nicht mehr auf den Metalleffektpigmenten mit größerem Pigmentdurchmesser (Teilchendurchmesser) mit aufgefällt werden. Durch die nachfolgende Zugabe der Base(n) wird die Reaktion kontrolliert beschleunigt, wobei die Deckkraft überraschenderweise erhalten bleibt, d.h. der bereits mit einer Siliciumoxidbeschichtung versehene Feinanteil der Metalleffektpigmentpräparation wird nicht mehr an die Metalleffektpigmente mit größerem Teilchendurchmesser gebunden.

Die gute Balance zwischen Deckkraft (Deckvermögen) und Gasungsstabilität der nach dem erfindungsgemäßen Sol-Gel-Verfahren hergestellten mit Siliciumoxid beschichteten Aluminiumeffektpigmente ist vermutlich darauf zurückzuführen, dass trotz $SiO_2$-Beschichtung ein überraschend großer Feinanteil separat erhalten bleibt, und somit die Deckkraft signifikant verbessert wird.

In zusammenfassender Bewertung der Versuchsergebnisse ist festzustellen, dass die nach dem erfindungsgemäßen Sol-Gel-Verfahren mit $SiO_2$ beschichteten Aluminiumeffektpigmente deutlich bessere Anwendungseigenschaften hinsichtlich Deckkraft (Deckvermögen) mit guter Gasungsstabilität aufweisen, verglichen mit nach herkömmlichem Sol-Gel-Verfahren mit $SiO_2$ beschichteten Aluminiumeffektpigmenten.

Die erfindungsgemäß hergestellten Aluminiumeffektpigmente sind deshalb sowohl in wässrigen Lacksystemen, wässrigen Farben, wässrigen Druckfarben als auch in Kosmetika, die üblicherweise ebenfalls wasserhaltig ist, besonders vorteilhaft einsetzbar.

## Patentansprüche

1. Mit Siliciumoxid beschichtetes Metalleffektpigment, welches als Pulver, Trockenpräparat oder Paste vorliegt,
**dadurch gekennzeichnet,**
**dass** in und/oder auf der Siliciumoxidschicht und/oder im Lösemittel der Paste
0,01 - 1 Gew.-% organische und/oder anorganische Säure und 0,01 - 1 Gew.-% organische und/oder anorganische Base vorliegt, wobei sich die Gew.-% Angaben auf das Gesamtgewicht des Pigments beziehen, wobei das mit Siliciumoxid beschichtete Metalleffektpigment erhältlich ist durch ein Verfahren zum Beschichten von Metalleffektpigmenten mit Siliciumoxid, wobei Alkoxysilane und/oder Siliciumhalogenid (e) in organischem Lösungsmittel mit Wasser in Gegenwart von Metalleffektpigmenten umgesetzt werden, wobei
die Umsetzung wenigstens zwei Schritte umfasst,
wobei (a) die Umsetzung in einem ersten Schritt unter Zugabe von Säure und in einem zweiten Schritt unter Zugabe von Base durchgeführt wird oder
wobei (b) die Umsetzung in einem ersten Schritt unter Zugabe von Base und in einem zweiten Schritt unter Zugabe von Säure durchgeführt wird.

2. Metalleffektpigment nach einem der vorstehenden Ansprüche;
**dadurch gekennzeichnet,**
**dass** die organische Säure 1 bis 8 C-Atome enthält.

3. Metalleffektpigment nach einem der vorstehenden Ansprüche;
**dadurch gekennzeichnet,**
**dass** die Base ein Amin ist.

4. Verfahren zum Beschichten von Metalleffektpigmenten mit Siliciumoxid, wobei Alkoxysilan(e)und/oder Siliciumhalogenid(e) in organischem Lösungsmittel mit Wasser in Gegenwart von Metalleffektpigmenten umgesetzt werden,
**dadurch gekennzeichnet,**
**dass** die Umsetzung wenigstens zwei Schritte umfasst, wobei (a) die Umsetzung in einem ersten Schritt unter Zugabe von Säure und in einem zweiten Schritt unter Zugabe von Base durchgeführt wird
oder
wobei (b) die Umsetzung in einem ersten Schritt unter Zugabe von Base und in einem zweiten Schritt unter Zugabe von Säure durchgeführt wird.

5. Verfahren zur Herstellung nach Anspruch 4,
**dadurch gekennzeichnet,**
**dass** die Säure eine organische Säure ist und 1 bis 8 C-Atome enthält.

6. Verfahren nach Anspruch 5,
**dadurch gekennzeichnet,**
**dass** die organische Säure aus der Gruppe, die aus Ameisensäure, Essigsäure, Propionsäure, Oxalsäure, Malonsäure, Maleinsäure, Bernsteinsäure, Anhydriden der genannten Säuren und Mischungen davon besteht, ausgewählt wird.

7. Verfahren nach Anspruch 4,
**dadurch gekennzeichnet,**
**dass** die Säure eine anorganische Säure ist, die vorzugsweise aus der Gruppe, die aus Salpetersäure, Schwefelsäure, Phosphorsäure, Salzsäure Borsäure, Flusssäure und deren Mischungen besteht, ausgewählt wird.

8. Verfahren nach einem der Ansprüche 4 bits 7,
**dadurch gekennzeichnet,**
**dass** die Base eine organische Base, vorzugsweise ein Amin, ist, und bevorzugt aus der Gruppe, die aus Dimethylethanolamin (DMEA), Monoethanolamin, Diethanolamin, Triethanolamin, Ethylendiamin (EDA), t-Butylamin, Monomethylamin, Dimethylamin, Trimethylamin, Monoethylamin, Diethylamin, Triethylamin, Pyridin, Pyridinderivat , Anilin, Anilinderivat, Cholin, Cholinderivat, Harnstoff, Harnstoffderivat, Hydrazinderivat und Mischungen davon besteht, ausgewählt wird.

**9.** Verfahren nach einem der Ansprüche 4 bis 8,
**dadurch gekennzeichnet,**
**dass** die Base eine anorganische Base ist und vorzugsweise aus der Gruppe, die aus Ammoniak, Hydrazin, Natriumhydroxid, Kaliumhydroxid, Ammoniumhydroxid, Ammoniumcarbonat, Ammoniumhydrogencarbonat, Natriumcarbonat, Natriumhydrogencarbonat, Kaliumcarbonat, Kaliumhydrogencarbonat, und Mischungen davon besteht, ausgewählt wird.

**10.** Verfahren nach einem der vorstehenden Ansprüche 4 bis 9,
**dadurch gekennzeichnet,**
**dass** die Umsetzung in einer Eintopfreaktion erfolgt.

**11.** Verfahren nach einem der vorstehenden Ansprüche 4 bis 10,
**dadurch gekennzeichnet,**
**dass** als Tetraalkoxysilan Tetraethoxysilan und/oder Oligomere von Tetraethoxysilan verwendet werden.

**12.** Verfahren nach einem der vorstehenden Ansprüche 4 bis 11,
**dadurch gekennzeichnet,**
**dass** die Metalleffektpigmente aus der Gruppe, die aus Aluminium, Eisen, Zink, Zinn, Silber, Gold, Edelstahl, Kupfer, Messing (Goldbronze), Titan und Mischungen davon besteht, ausgewählt wird.

**13.** Verfahren nach einem der vorstehenden Ansprüche 4 bis 12,
**dadurch gekennzeichnet,**
**dass** die aufgebrachte Siliciumoxidbeschichtung nachfolgend organischchemisch modifiziert wird.

**14.** Verwendung von Metalleffektpigment nach Anspruch 1 bis 3 in Kosmetika, Kunststoffen und Beschichtungszusammensetzungen, vorzugsweise Farben, Druckfarben, Lacken, Pulverlacken.

**15.** Gegenstand,
**dadurch gekennzeichnet,**
**dass** der Gegenstand Metalleffektpigment gemäß Anspruch 1 bis 3 aufweist und/oder enthält.

## Claims

**1.** Metal-effect pigment coated with silicon oxide in the form of powder, dry substance or paste,
**characterised in that**

0.01 - 1 % by weight of organic and/or inorganic acid and
0.01 - 1 % by weight of organic and/or inorganic base is present in and/or on the silicon oxide layer and/or in the solvent of the paste,

the figures for % by weight being based on the total weight of the pigment,
the metal-effect pigment coated with silicon oxide being obtained by a method of coating metal-effect pigments with silicon oxide whereby alkoxy silane(s) and/or siliconhalide(s) in organic solvent are reacted with water in the presence of metal-effect pigments, the reaction comprising at least two steps,
whereby (a) the reaction is carried out by adding acid in a first step and adding base in a second step,
or

(b) the reaction is carried out by adding base in a first step and adding acid in a second step.

**2.** Metal-effect pigment as claimed in one of the preceding claims
**characterised in that**
the organic acid contains 1 to 8 C atoms.

3. Metal-effect pigment as claimed in one of the preceding claims,
**characterised in that**
the base is an amine.

4. Method of coating metal-effect pigments with silicon oxide, whereby alkoxy silane(s) and/or silicon halide(s) in organic solvent are reacted with water in the presence of metal-effect pigments,
**characterised in that**
the reaction comprises at least two steps,
whereby (a) the reaction is carried out by adding acid in a first step and adding base in a second step, or

(b) the reaction is carried out by adding base in a first step and adding acid in a second step.

5. Production method as claimed in claim 4,
**characterised in that**
the acid is an organic acid and contains 1 to 8 C atoms.

6. Method as claimed in claim 5,
**characterised in that**
the organic acid is selected from the group comprising formic acid, acetic acid, propionic acid, oxalic acid, malonic acid, maleic acid, succinic acid, anhydrides of said acids and mixtures thereof.

7. Method as claimed in claim 4,
**characterised in that**
the acid is an inorganic acid which is preferably selected from the group comprising nitric acid, sulphuric acid, phosphoric acid, hydrochloric acid, boric acid, hydrofluoric acid and mixtures thereof.

8. Method as claimed in one of claims 4 to 7,
**characterised in that**
the base is an organic base, preferably an amine and preferably selected from the group comprising dimethyl ethanolamine (DMEA), monoethanolamine, diethanolamine, triethanolamine, ethylene diamine (EDA), t-butylamine, monomethylamine, dimethylamine, trimethylamine, monoethylamine, diethylamine, triethylamine, pyridine, pyridine derivative, aniline, aniline derivative, choline, choline derivative, urea, urea derivative, hydrazine derivative and mixtures thereof.

9. Method as claimed in one of claims 4 to 8,
**characterised in that**
the base is an inorganic base and is preferably selected from the group comprising ammonia, hydrazine, sodium hydroxide, potassium hydroxide, ammonium hydroxide, ammonium carbonate, ammonium hydrogen carbonate, sodium carbonate, sodium hydrogen carbonate, potassium carbonate, potassium hydrogen carbonate and mixtures thereof.

10. Method as claimed in one of preceding claims 4 to 9,
**characterised in that**
the reaction takes place in a one-pot reaction.

11. Method as claimed in one of preceding claims 4 to 10,
**characterised in that**
the tetraalkoxysilane is tetraethoxysilane and/or oligomers of tetraethoxysilane.

12. Method as claimed in one of preceding claims 4 to 11,
**characterised in that**
the metal-effect pigments are selected from the group comprising aluminium, iron, zinc, tin, silver, gold, stainless steel, copper, brass (gold bronze), titanium, and mixtures thereof.

13. Method as claimed in one of preceding claims 4 to 12,
**characterised in that**
the silicon oxide coating applied is subsequentlysubjected to organic- chemical modification.

14. Use of metal-effect pigment as claimed in claims 1 to 3, in cosmetics, plastics and coating compositions, preferably inks, printing inks, paints, powder coatings.

15. Object,
**characterised in that**
the object has and/or contains metal-effect pigment as claimed in claims 1 to 3.

## Revendications

1. Pigment à effet métallisé revêtu d'oxyde de silicium, lequel se présente sous forme de poudre, de préparation sèche ou de pâte,
**caractérisé en ce que**
dans et/ou sur la couche d'oxyde de silicium et/ou dans le solvant de la pâte, il y a 0,01 à 1 % en poids d'acide organique et/ou inorganique et

   0,01 à 1 % en poids de base organique et/ou inorganique, les données en % en poids se rapportant au poids total du pigment, sachant que le pigment à effet métallisé revêtu d'oxyde de silicium peut être obtenu par un procédé de revêtement de pigments à effet métallisé par de l'oxyde de silicium, un ou des alcoxysilanes et/ou un ou des halogénures de silicium étant mis en réaction dans un solvant organique avec de l'eau en présence de pigments à effet métallisé, la réaction comprenant au moins deux étapes, lors desquelles

   (a) la réaction est effectuée dans une première étape moyennant l'addition d'acide et dans une deuxième étape moyennant l'addition de base,
   ou
   (b) la réaction est effectuée dans une première étape moyennant l'addition de base et dans une deuxième étape moyennant l'addition d'acide.

2. Pigment à effet métallisé selon l'une quelconque des revendications précédentes, **caractérisé en ce que** l'acide organique contient 1 à 8 atomes de carbone.

3. Pigment à effet métallisé selon l'une quelconque des revendications précédentes, **caractérisé en ce que** la base est une amine.

4. Procédé de revêtement de pigments à effet métallisé avec de l'oxyde de silicium, dans lequel un ou des alcoxysilanes et/ou un ou des halogénures de silicium est ou sont mis en réaction dans un solvant organique avec de l'eau en présence de pigments à effet métallisé
**caractérisé en ce que**
la réaction comprend au moins deux étapes, lors desquelles (a) la réaction est effectuée dans une première étape moyennant l'addition d'acide et dans une deuxième étape moyennant l'addition de base,
ou

   (b) la réaction est effectuée dans une première étape moyennant l'addition de base et dans une deuxième étape moyennant l'addition d'acide.

5. Procédé de fabrication selon la revendication 4,
**caractérisé en ce que**
l'acide est un acide organique et contient 1 à 8 atomes de carbone.

6. Procédé de fabrication selon la revendication 5,
**caractérisé en ce que**
l'acide organique est choisi parmi le groupe qui consiste en l'acide formique, l'acide acétique, l'acide propionique, l'acide oxalique, l'acide malonique, l'acide maléique, l'acide succinique, des anhydrides des acides cités et des mélange de ceux-ci.

7. Procédé de fabrication selon la revendication 4,
**caractérisé en ce que**
l'acide est un acide inorganique qui est choisi de préférence parmi le groupe qui consiste en l'acide nitrique, l'acide

sulfurique, l'acide phosphorique, l'acide chlorhydrique, l'acide borique, l'acide fluorhydrique et leurs mélanges.

**8.** Procédé de fabrication selon l'une quelconque des revendications 4 à 7,
**caractérisé en ce que**
la base est une base organique, de préférence une amine, et est choisie de préférence parmi le groupe qui consiste en la diméthyléthanolamine (DMEA), la monoéthanolamine, la diéthanolamine, la triéthanolamine, l'éthylène diamine (EDA), la t-butylamine, la monométhylamine, la diméthylamine, la triméthylamine, la monoéthylamine, la diéthylamine, la triéthylamine, la pyridine, les dérivés de la pyridine, l'aniline, les dérivés de l'aniline, la choline, les dérivés de la choline, l'urée, les dérivés de l'urée, les dérivés de l'hydrazine et les mélanges de celles-ci.

**9.** Procédé de fabrication selon l'une quelconque des revendications 4 à 8,
**caractérisé en ce que**
la base est une base inorganique et est choisie de préférence parmi le groupe qui consiste en l'ammoniac, l'hydrazine, l'hydroxyde de sodium, l'hydroxyde de potassium, l'hydroxyde d'ammonium, le carbonate d'ammonium, l'hydrogénocarbonate d'ammonium, le carbonate de sodium, l'hydrogénocarbonate de sodium, le carbonate de potassium, l'hydrogénocarbonate de potassium et des mélanges de ceux-ci.

**10.** Procédé de fabrication selon l'une quelconque des revendications 4 à 9,
**caractérisé en ce que**
la transformation s'effectue lors d'une réaction dans une seule cuve.

**11.** Procédé de fabrication selon l'une quelconque des revendications 4 à 10,
**caractérisé en ce que**
comme tétraalcoxysilanes sont utilisés le tétraéthoxysilane et/ou des oligomères du tétraéthoxysilane.

**12.** Procédé de fabrication selon l'une quelconque des revendications 4 à 11,
**caractérisé en ce que**
les pigments à effet métallisé sont choisis parmi le groupe qui consiste en l'aluminium, le fer, le zinc, l'étain, l'argent, l'or, l'acier inoxydable, le cuivre, le laiton (bronze doré) le titane et des mélanges de ceux-ci.

**13.** Procédé de fabrication selon l'une quelconque des revendications 4 à 12,
**caractérisé en ce que**
le revêtement d'oxyde de silicium appliqué est modifié ensuite organochimiquement.

**14.** Utilisation de pigments à effet métallisé selon la revendications 1 à 3 dans des cosmétiques, des plastiques et des composition d'enduction, de préférence des peintures, des encres d'imprimerie, des laques, des poudres pour revêtement électrostatique.

**15.** Objet
**caractérisé en ce que**
l'objet comporte et/ou contient un pigment à effet métallisé selon les revendications 1 à 3.

Fig. 1: Deckfähigkeit der Beispiele

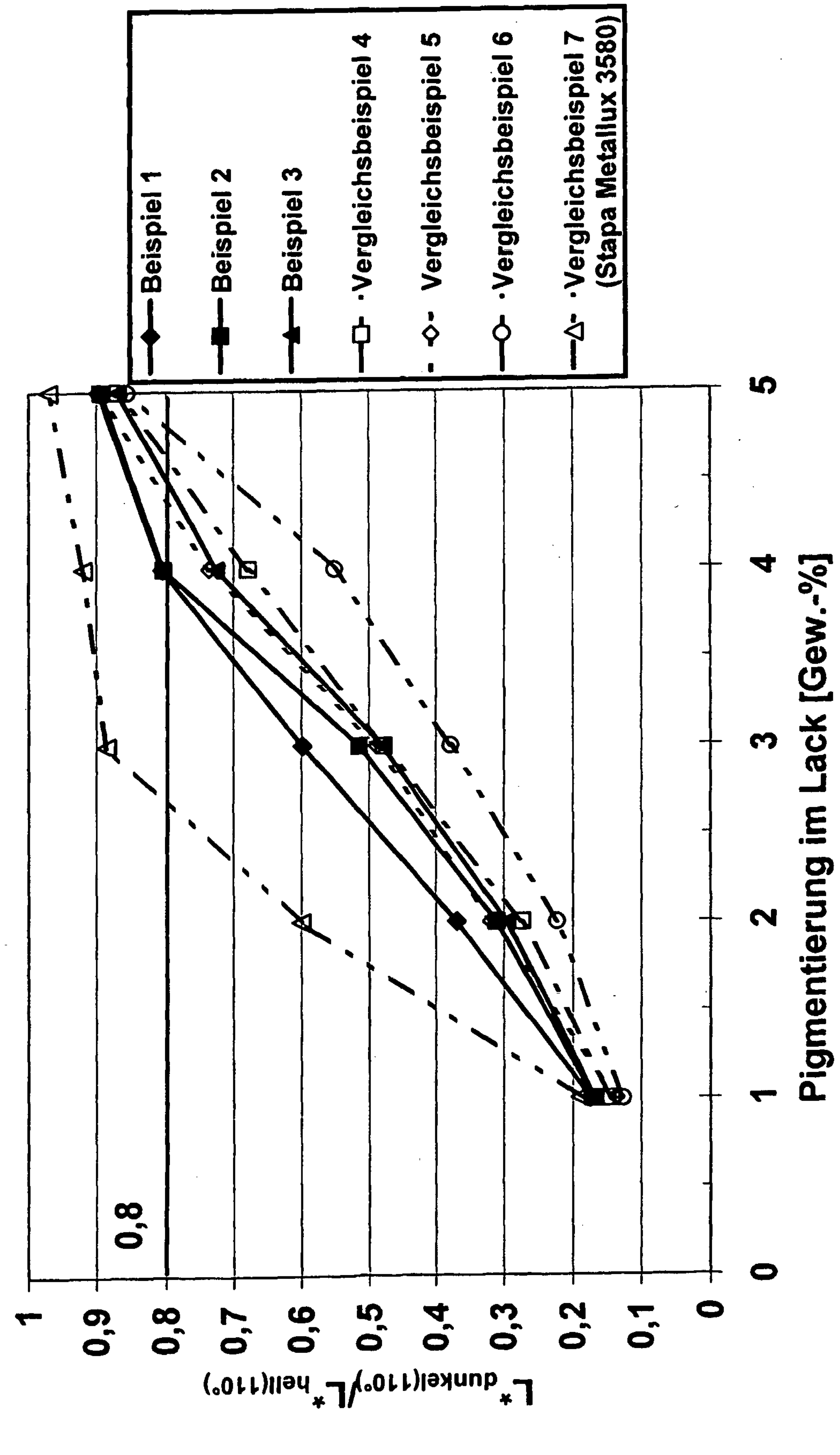

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0259592 A
- US 2885366 A, R.K. Iler
- DE 19820112 A1
- EP 1332714 A1
- WO 2004026268 A2
- EP 1756234 B1
- US 7419538 B2
- EP 1619222 A1
- EP 1953195 A
- WO 03095564 A1
- JP 2004124069 A
- US 5766335 A
- EP 1953195 A1
- DE 10315715 A1
- DE 102006062271


### In der Beschreibung aufgeführte Nicht-Patentliteratur


- **A. KIEHL ; K. GREIWE.** *Progr. in org. Coatings,* 1999, vol. 37, 179-183
- **R.K. ILER.** *The Chemistry of Silica,* 1979
- **A. KIEHL ; K. GREIWE.** *Progr. in org. Coatings,* 1999, vol. 37, 179-183